(19) Europäisches Patentamt
European Patent Office
Office européen des brevets

(11) EP 3 882 046 B1

(12) # EUROPEAN PATENT SPECIFICATION

(45) Date of publication and mention of the grant of the patent:
**30.07.2025 Bulletin 2025/31**

(21) Application number: **19885237.8**

(22) Date of filing: **01.11.2019**

(51) International Patent Classification (IPC):
***B60C 1/00*** $^{(2006.01)}$ ***C08L 7/00*** $^{(2006.01)}$
***C08L 9/00*** $^{(2006.01)}$ ***C08L 9/02*** $^{(2006.01)}$
***C08L 9/06*** $^{(2006.01)}$ ***C08K 3/30*** $^{(2006.01)}$
***C08K 3/36*** $^{(2006.01)}$

(52) Cooperative Patent Classification (CPC):
(C-Sets available)
**B60C 1/0016; C08C 19/22; C08C 19/25; C08C 19/44; C08L 7/00; C08L 15/00;**
B60C 2011/0025; B60C 2011/145; B60C 2011/147; Y02T 10/86 (Cont.)

(86) International application number:
**PCT/JP2019/042984**

(87) International publication number:
**WO 2020/100628 (22.05.2020 Gazette 2020/21)**

(54) **RUBBER COMPOSITION, VULCANIZED RUBBER, AND TIRE**
KAUTSCHUKZUSAMMENSETZUNG, VULKANISIERTER KAUTSCHUK UND REIFEN
COMPOSITION DE CAOUTCHOUC, CAOUTCHOUC VULCANISÉ ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2018 JP 2018215883**

(43) Date of publication of application:
**22.09.2021 Bulletin 2021/38**

(73) Proprietor: **BRIDGESTONE CORPORATION**
**Chuo-ku**
**Tokyo 104-8340 (JP)**

(72) Inventors:
- **KAWASHIMA, Masahiro**
  **Tokyo 104-8340 (JP)**
- **TSUDA, Shunsuke**
  **Tokyo 104-8340 (JP)**
- **TAKAHASHI, Ayaka**
  **Tokyo 104-8340 (JP)**

(74) Representative: **Marks & Clerk LLP**
**15 Fetter Lane**
**London EC4A 1BW (GB)**

(56) References cited:
**WO-A1-2017/046766**
**WO-A1-2018/050748**
**WO-A1-2018/050748**
**WO-A1-2018/079801**
**WO-A1-2018/198759**
**JP-A- 2007 510 768**
**JP-A- 2009 203 288**
**JP-A- 2012 102 238**
**JP-A- 2013 023 640**
**US-A1- 2018 297 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 136/06, C08F 4/545;**
**C08L 7/00, C08L 15/00, C08L 15/00, C08L 9/00, C08L 23/06, C08L 23/0861, C08L 57/02, C08K 3/04, C08K 3/36, C08K 5/548, C08K 5/09, C08K 3/22, C08K 3/06, C08K 5/18, C08K 5/47, C08K 5/47;**
**C08L 15/00, C08L 7/00, C08L 15/00, C08L 9/00, C08L 23/06, C08L 23/0861, C08L 57/02, C08K 3/04, C08K 3/36, C08K 5/548, C08K 5/09, C08K 3/22, C08K 3/06, C08K 5/18, C08K 5/47, C08K 5/47;**
C08F 236/06, C08F 212/08

## Description

### Technical Field

The present invention relates to a rubber composition, a vulcanized rubber, and a tire.

### Background Art

When a tire runs on an ice-snow road surface, due to a water film occurring between the road surface and the tire, the tire slips, and the braking performance is degraded. Thus, for a studless tire, it is required to improve an on-ice performance that exhibits a grip even on the ice-snow road surface, and allows easy braking of a vehicle.

For example, PTL 1 discloses a rubber composition having an improved coefficient of friction on ice, and excellent flexibility at a low temperature, wet grip performance, and on-ice grip performance, which contains at least one type of diene-based polymer selected from the group consisting of natural rubber, isoprene rubber, styrene-butadiene rubber, butadiene rubber, and isobutylene-isoprene copolymer, as a rubber component, and foamable bubbles in the rubber matrix, and contains, per 100 parts by weight of the rubber component, 2 to 50 parts by weight of a low molecular weight styrene-butadiene copolymer in which (a) the weight average molecular weight in terms of polystyrene is $0.2\times10^4$ to $8\times10^4$, (b) the styrene bond content is 30% by weight or less, and (c) S for a styrene bond content, and V for a vinyl bond content satisfy the relationship of $S+(V/2)<25$.

In addition, PTL 2 discloses a rubber composition capable of largely improving the on-ice performance of a tire, which contains at least three types of diene-based polymers which form a plurality of polymer phases incompatible with each other, and silica. In the contents, in at least three types of diene-based polymers, each blending amount is 10% by mass or more of the total amount of the diene-based polymers. Among the diene-based polymers in which each blending amount is 10% by mass or more per the total amount of the diene-based polymers, the blending amount of a diene-based polymer (A) having the lowest glass transition temperature (Tg) is 85% by mass or more with respect to the blending amount of the diene-based polymer whose blending amount is largest among the diene-based polymers other than the corresponding diene-based polymer (A). Among the diene-based polymers in which each blending amount is 10% by mass or more with respect to the total amount of the diene-based polymers, a diene-based polymer (B) other than the diene-based polymer (A), which has a lower glass transition temperature (Tg) than a diene-based polymer (C) having the highest glass transition temperature (Tg), is modified with a silicon atom-containing compound. The diene-based polymer (B) is a copolymer of a conjugated diene compound and styrene, and satisfies the relationship of the formula (i) ($St+Vi/2\leq33$; in the formula, St is a styrene bond content (% by mass) of the diene-based polymer (B), and Vi is a vinyl bond content (% by mass) of a conjugated diene compound portion of the diene-based polymer (B)). The blending amount of the silica is 25 parts by mass or more per 100 parts by mass as a total of the diene-based polymers. Furthermore US2018297406 relates to a rubber composition for a winter tire comprising a rubber component containing natural rubber, polybutadiene rubber, and styrene-butadiene copolymer; silica; and a liquid epoxidized polybutadiene.

### Citation List

#### Patent Literature

PTL 1: JP 9-194640 A
PTL 2: WO 2017/126629

### Summary of Invention

#### Technical Problem

In order to improve the on-ice performance of a tire, a tread rubber may be softened to improve the gripping force, but on the other hand, the wear resistance is lowered due to the softness. Thus, the on-ice performance and the wear resistance were contradictory. Although PTL 1 discloses a technique of realizing improvement of the on-ice performance by blending a low molecular weight conjugated diene-based polymer having a low vinyl content, it was impossible to improve the balance between on-ice performance and wear resistance. In addition, in the technique disclosed in PTL 2, since a hysteresis loss (tan $\delta$) of a tire at a low temperature (for example, -20°C) is insufficient, there is a room for improvement in the on-ice performance.

An object of the present invention is to provide a tire excellent in the balance between on-ice performance and

wear resistance, and a vulcanized rubber and a rubber composition from which the tire is obtained.

Solution to Problem

<1> A rubber composition containing: a rubber component containing natural rubber, polybutadiene rubber, and styrene-butadiene copolymer rubber; a silica-containing filler; and an unmodified conjugated diene-based polymer in which a weight average molecular weight measured by gel permeation chromatography in terms of polystyrene is 5,000 or more and less than 40,000, a styrene bond content of a conjugated diene compound portion is less than 10% by mass, and a vinyl bond content of the conjugated diene compound portion is 40% to 65% by mass. A mass n of the natural rubber in the rubber component is 35% by mass to 44% by mass, and a mass b of the polybutadiene rubber, and a mass s of the styrene-butadiene copolymer rubber satisfy a relationship of $s \leq b$, and a content of the conjugated diene-based polymer is 1 to 40 parts by mass per 100 parts by mass of the rubber component.
<2> The rubber composition described in <1>, in which the conjugated diene-based polymer is polybutadiene.
<3> The rubber composition described in <1> or <2>, in which the weight average molecular weight of the conjugated diene-based polymer in terms of polystyrene is 6,000 or more and 30,000 or less.
<4> The rubber composition described in any one of <1> to <3>, in which the vinyl bond content of the conjugated diene compound portion of the conjugated diene-based polymer is 50% or more.
<5> The rubber composition described in any one of <1> to <4>, in which a ratio (st/s) of a styrene bond content st (%) of the rubber component to the mass s is 1.0 or less.
<6> The rubber composition described in any one of <1> to <5>, further containing a void introducing agent.
<7> The rubber composition described in <6>, in which the void introducing agent is at least one type selected from the group consisting of a foaming agent, hydrophilic short fibers, metal sulfate, thermally expandable microcapsules, and porous cellulose particles.
<8> A vulcanized rubber using the rubber composition described in any one of <1> to <7>.
<9> The vulcanized rubber described in <8>, which has a plurality of voids.
<10> A tire using the vulcanized rubber described in <8> or <9> for a tread.

Advantageous Effects of Invention

According to the present invention, it is possible to provide a tire excellent in the balance between on-ice performance and wear resistance, and a vulcanized rubber and a rubber composition from which the tire is obtained.

Brief Description of Drawings

FIG. 1 is a cross-sectional schematic view of a part of silica particles in the inward direction (a view in an enlarged scale).
FIG. 2 is a schematic view of curves of press-injection and discharge of mercury on silica in measurement using a mercury porosimeter based on the mercury intrusion porosimetry, in which the vertical axis indicates a differential mercury press-injection amount (-dV/d(log d)) for a mercury press-injection curve C, and indicates a differential mercury discharge amount (-dV/d(log d)) for a mercury discharge curve D, V means a mercury press-injection amount (cc) for the mercury press-injection curve C, and a mercury discharge amount (cc) for the mercury discharge curve D, d means an opening diameter (nm) in a silica pore, and the horizontal axis indicates this d (nm).

Description of Embodiments

Hereinafter, the present invention will be illustrated and described in detail on the basis of the embodiment thereof.
In the following descriptions, the description of "A to B" indicating a numerical range indicates a numerical range including the end points A and B, and indicates "A or more and B or less" (in the case of A<B), or "A or less and B or more" (in the case of B<A).
In addition, parts by mass and % by mass are synonymous with parts by weight and % by weight, respectively.

<Rubber Composition>

A rubber composition of the present invention contains: a rubber component containing natural rubber, polybutadiene rubber, and styrene-butadiene copolymer rubber; a silica-containing filler; and an unmodified conjugated diene-based polymer in which the weight average molecular weight measured by gel permeation chromatography in terms of polystyrene is 5,000 or more and less than 40,000, the styrene bond content of a conjugated diene compound portion is less than 10%, and the vinyl bond content of the conjugated diene compound portion is 40% to 65% by mass.

Hereinafter, "the unmodified conjugated diene-based polymer in which the weight average molecular weight measured by gel permeation chromatography in terms of polystyrene is 5,000 or more and less than 40,000, the styrene bond content of the conjugated diene compound portion is less than 10% by mass, and the vinyl bond content of the conjugated diene compound portion is 40% to 65% by mass" may be referred to as a "low molecular weight conjugated diene-based polymer."

In addition, in the present invention, the mass n of the natural rubber in the rubber component is 35% to 44% by mass, and the mass b of the polybutadiene rubber, and the mass s of the styrene-butadiene copolymer rubber satisfy the relationship of $s \leq b$. In addition, in the rubber composition, the content of the low molecular weight conjugated diene-based rubber is 1 to 40 parts by mass per 100 parts by mass of the rubber component.

When the rubber composition has the aforementioned structure, a tire obtained from the rubber composition of the present invention is excellent in the balance between on-ice performance and wear resistance.

The reason for this is not clear, but this is presumed to be caused by the following reasons.

Styrene-butadiene copolymer rubber (SBR) and polybutadiene rubber (BR) are easily compatible due to the structure derived from butadiene, and SBR and BR tend to be easily separated from natural rubber (NR). Therefore, it may be thought that the phase of the rubber component of the present invention is easily separated into an NR-containing phase (referred to as an NR phase), and a phase containing SBR and BR (referred to as an SB phase).

Since the SB phase includes BR having a lower elasticity than SBR, and SBR having a higher elasticity than BR and has a structure where SBR is not more than BR ($s \leq b$), the modulus of elasticity of the tire at a low temperature (-20°C) is lowered, and the tire is easily deformed. Thus, it may be thought that the hysteresis loss at a low temperature may be increased, and the braking effect is also easily exhibited.

Since the content of NR in the rubber component is 35 to 44% by mass, and the rubber composition contains the silica-containing filler, it may be thought that an excessive decrease of the modulus of elasticity of the tire is suppressed, and the wear resistance is excellent.

Since the content of the low molecular weight conjugated diene-based polymer is 1 to 40 parts by mass per 100 parts by mass of the rubber component, a rubber matrix may be softened, and the hysteresis loss at a low temperature may be increased. Thus, it may be thought that a grip is easily exhibited, and the on-ice performance is excellent.

From the above, it may be thought that the tire obtained from the rubber composition of the present invention is excellent in the balance between on-ice performance and wear resistance.

Hereinafter, the present invention will be described in detail.

[Rubber Component]

The rubber composition of the present invention contains a rubber component containing natural rubber (NR), polybutadiene rubber (BR) and styrene-butadiene copolymer rubber (SBR).

As described above, since SBR and BR are easily compatible due to the structure derived from butadiene, and SBR and BR are easily separated from NR, the phase of the rubber component is easily separated into an NR-containing phase (NR phase), and a phase containing SBR and BR (SB phase). Since SBR has a rigid styrene-derived structure, it may be thought that the SB phase containing SBR is harder than the NR phase, and the rubber component has a soft-hard phase structure with the NR phase and the SB phase. Since the rubber component contained in the rubber composition of the present invention has such a phase structure, it may be thought that the tire obtained from the rubber composition of the present invention has a low modulus of elasticity at a low temperature, and a high hysteresis loss.

When a filler is selectively distributed in the phase containing SBR and BR (SB phase), it may be thought that the flexibility of the NR phase may be maintained so that the on-ice performance may be maintained, and the wear resistance of the tire may be improved.

The rubber component may be unmodified or modified, but from the viewpoint of distributing a larger amount of filler (especially, silica) in the SB phase, it is desirable that either or both of polybutadiene rubber or/and styrene-butadiene copolymer rubber as rubber components constituting the SB phase is/are modified with a modifying functional group having an affinity with the filler.

[Modifying functional Group]

The modifying functional group is not particularly limited as long as it is a functional group having an affinity with a filler (especially, silica), but preferably contains at least one type of atom selected from the group consisting of a nitrogen atom, a silicon atom, an oxygen atom, and a tin atom.
Examples thereof include a modifying functional group containing a nitrogen atom, a modifying functional group containing a silicon atom, a modifying functional group containing an oxygen atom, and a modifying functional group containing a tin atom. The modifying functional group may be used alone or in combination of two or more thereof.
Among these, a modifying functional group containing a nitrogen atom, a modifying functional group containing a silicon atom, and a modifying functional group containing an oxygen atom are preferred from the viewpoint of strong interaction with a filler such as silica or carbon black.
A method of introducing the modifying functional group into the rubber component is not particularly limited and may be properly selected according to purposes. Examples thereof include a method using a functional group-containing polymerization initiator, a method of copolymerizing a functional group-containing monomer with another compound, and a method of reacting a modifier with a polymerization terminal of the rubber component. For these, one type of method may be carried out alone, or two or more types may be carried out in combination.

-Modifying Functional Group Containing Nitrogen Atom -

The modifying functional group containing a nitrogen atom is not particularly limited and may be properly selected according to purposes. Examples thereof include a substituted amino group represented by the following general formula (i), and a cyclic amino group represented by the following general formula (II).

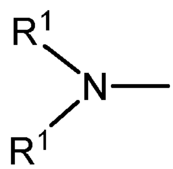

(I)

In the formula, $R^1$ is an alkyl group, a cycloalkyl group, or an aralkyl group, which has 1 to 12 carbon atoms. Here, the alkyl group is preferably a methyl group, an ethyl group, a butyl group, an octyl group, or an isobutyl group, the cycloalkyl group is preferably a cyclohexyl group, and the aralkyl group is preferably a 3-phenyl-1-propyl group. $R^1$'s may have the same types or different types.

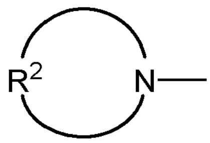

(II)

In the formula, a $R^2$ group is an alkylene group, a substituted alkylene group, an oxy-alkylene group or an N-alkylamino-alkylene group, which has 3 to 16 methylene groups. Here, the substituted alkylene group contains monosubstituted to octa-substituted alkylene groups, and examples of the substituent include a linear or branched alkyl group, a cycloalkyl group, a bicycloalkyl group, an aryl group, and an aralkyl group each of which has 1 to 12 carbon atoms. Here, the alkylene group is preferably a trimethylene group, a tetramethylene group, a hexamethylene group, or a dodecamethylene group, the substituted alkylene group is preferably a hexadecamethylene group, the oxyalkylene group is preferably an oxydiethylene group, and the N-alkylamino-alkylene group is preferably a N-alkylazadiethylene group.
Examples of the cyclic amino group represented by the general formula (II) are not particularly limited and may be properly selected according to purposes. The examples include groups obtained by removing one hydrogen atom bonded to a nitrogen atom from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadece-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, and 1,5,5-trimethyl-3-azabicyclo[4.4.0]decane. The cyclic amino group may be used alone or in combination of two or more thereof.

-Modifying Functional Group Containing Silicon Atom-

The modifying functional group containing a silicon atom is not particularly limited and may be properly selected according to purposes. Examples thereof include a modifying functional group having a silicon-carbon bond, which is formed by using a coupling agent represented by the following general formula (III).

Chemically bonding the rubber components constituting the SB phase and silicon through the silicon-carbon bond is desirable in that the affinity between the SB phase and the filler may be enhanced and a larger amount of filler may be distributed in the SB phase.

In general, when silicon is simply mixed in the rubber composition, a reinforcing property or the like of the rubber composition is low due to a low affinity with the rubber component. However, when the rubber components constituting the SB phase and silicon are chemically bonded through the silicon-carbon bond, the affinity between the rubber components constituting the SB phase and the filler may be enhanced and the hysteresis loss of the tire may be further increased.

$$(R^3)_aZ(R^4)_b \qquad \text{(III)}$$

In the formula, Z is silicon, each $R^3$ is independently selected from the group consisting of an alkyl group having 1 to 20 carbon atoms, a cycloalkyl group having 3 to 20 carbon atoms, an aryl group having 6 to 20 carbon atoms, and an aralkyl group having 7 to 20 carbon atoms, each $R^4$ is independently chlorine or bromine, a is 0 to 3, b is 1 to 4, and a+b=4. Here, the alkyl group is preferably a methyl group, an ethyl group, an n-butyl group, an n-octyl group, or a 2-ethylhexyl, the cycloalkyl group is preferably a cyclohexyl group, the aryl group is preferably a phenyl group, and the aralkyl group is preferably a neophyl group. $R^3$'s may have the same types or different types. $R^4$'s may have the same types or different types.

For the purpose of enhancing the interaction between modified rubber and silica, a modifier including at least one type of a compound represented by the following general formula (III-1) and a compound represented by the general formula (III-2) may be exemplified.

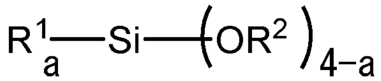
(III-1)

In the general formula (III-1), each of $R^1$ and $R^2$ independently represents a monovalent aliphatic hydrocarbon group having 1 to 20 carbon atoms or a monovalent aromatic hydrocarbon group having 6 to 18 carbon atoms, and a is an integer of 0 to 2. When there is a plurality of $OR^2$'s, the $OR^2$'s may be the same or different, and the molecule does not contain an active proton.

Here, specific examples of the compound (alkoxysilane compound) represented by the general formula (III-1) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, and divinyldiethoxysilane, but among these, tetraethoxysilane, methyltriethoxysilane and dimethyldiethoxysilane are highly preferred. The compound may be used alone or in combination of two or more thereof.

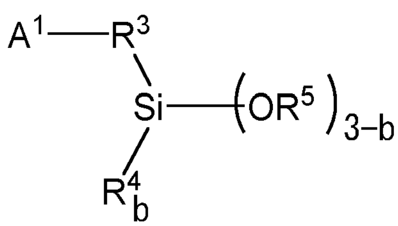
(III-2)

In the general formula (III-2), $A^1$ is a monovalent group having at least one type of functional group selected from the group consisting of epoxy, glycidyloxy, isocyanate, imine, carboxylic acid ester, carboxylic acid anhydride, cyclic tertiary amine, acyclic tertiary amine, pyridine, silazane, and disulfide, $R^3$ is a single-bonded or divalent hydrocarbon group, each of $R^4$ and $R^5$ is independently a monovalent aliphatic hydrocarbon group having 1 to 20 carbon atoms or a monovalent aromatic hydrocarbon group having 6 to 18 carbon atoms, and b is an integer of 0 to 2. When there is a plurality of $OR^5$'s, the $OR^5$'s may be the same or different, and the molecule does not contain an active proton.

Specific examples of the compound represented by the general formula (III-2) include epoxy group-containing alkoxysilane compounds, e.g., 2-glycidyloxyethyltrimethoxysilane, 2-glycidyloxyethyltriethoxysilane, (2-glycidyloxyethyl) methyldimethoxysilane, 3-glycidyloxypropyltrimethoxysilane, 3-glycidyloxypropyltriethoxysilane, (3-glycidyloxypropyl) methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. Among these, 3-glycidyloxypropyltrimethoxysilane, and 2-(3,4-epoxycyclohexyl)ethyltrimethoxysilane may be preferably used.

The coupling agent using silicon is not particularly limited, and may be properly selected according to purposes. Examples thereof include a hydrocarbyloxysilane compound, $SiCl_4$ (silicon tetrachloride), $(R^a)SiCl_3$, $(R^2)_2SiCl_2$, and $(R^a)_3SiCl$. Each $R^a$ independently represents an alkyl group having 1 to 20 carbon atoms, a cycloalkyl group having 3 to 20 carbon atoms, an aryl group having 6 to 20 carbon atoms, or an aralkyl group having 7 to 20 carbon atoms. Among these, the hydrocarbyloxysilane compound is preferred from the viewpoint of having a high affinity with silica.

(Hydrocarbyloxysilane Compound)

The hydrocarbyloxysilane compound is not particularly limited and may be properly selected according to purposes. Examples thereof include a hydrocarbyloxysilane compound represented by the following general formula (IV).

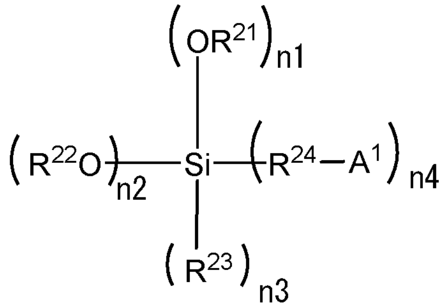

(IV)

In the formula, n1+n2+n3+n4=4 (in which, n2 is an integer of 1 to 4, and n1, n3 and n4 are integers of 0 to 3), and $A^1$ is at least one type of functional group selected from a saturated cyclic tertiary amine compound residue, an unsaturated cyclic tertiary amine compound residue, a ketimine residue, a nitrile group, a (thio)isocyanato group (which indicates an isocyanato group or a thioisocyanato group. Hereinafter, the same applies), a (thio)epoxy group, an isocyanuric acid trihydrocarbyl ester group, a carbonic acid dihydrocarbyl ester group, a nitrile group, a pyridine group, a (thio)ketone group, a (thio)aldehyde group, an amide group, a (thio)carboxylic acid ester group, a metal salt of (thio)carboxylic acid ester, a carboxylic acid anhydride residue, a carboxylic acid halogen compound residue, and a primary or secondary amino group or a mercapto group, which has a hydrolyzable group, and these may be the same or different when n4 is 2 or more. $A^1$ may be a divalent group that is bonded to Si to form a cyclic structure, and $R^{21}$ is a monovalent aliphatic or alicyclic hydrocarbon group having 1 to 20 carbon atoms or a monovalent aromatic hydrocarbon group having 6 to 18 carbon atoms, and these may be the same or different when n1 is 2 or more. $R^{23}$ is a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine), and these may be the same or different when n3 is 2 or more. $R^{22}$ is a monovalent aliphatic or alicyclic hydrocarbon group having 1 to 20 carbon atoms or a monovalent aromatic hydrocarbon group having 6 to 18 carbon atoms, which may contain a nitrogen atom and/or a silicon atom, and these may be the same or different or may form a ring together when n2 is 2 or more. $R^{24}$ is a divalent aliphatic or alicyclic hydrocarbon group having 1 to 20 carbon atoms or a divalent aromatic hydrocarbon group having 6 to 18 carbon atoms, and these may be the same or different when n4 is 2 or more. As for the hydrolyzable group in the primary or secondary amino group having the hydrolyzable group or the mercapto group having the hydrolyzable group, a trimethylsilyl group or a tert-butyldimethylsilyl group is preferred, and a trimethylsilyl group is particularly preferred. In this specification, "a monovalent aliphatic or alicyclic hydrocarbon group having 1 to 20 carbon atoms" means "a monovalent aliphatic hydrocarbon group having 1 to 20 carbon atoms or a monovalent alicyclic hydrocarbon group having 3 to 20 carbon atoms." The same applies to the case of a divalent hydrocarbon group.

In addition, it is more desirable that the hydrocarbyloxysilane compound represented by the general formula (IV) is a hydrocarbyloxysilane compound represented by the following general formula (V).

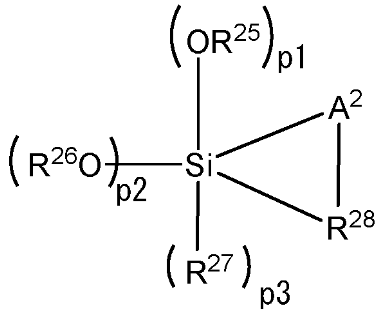

(V)

In the formula, p1+p2+p3=2 (in which, p2 is an integer of 1 to 2, and p1 and p3 are integers of 0 to 1), and $A^2$ is NRa (Ra is a monovalent hydrocarbon group, a hydrolyzable group or a nitrogen-containing organic group. As the hydrolyzable group, a trimethylsilyl group or a tert-butyldimethylsilyl group is preferred, and a trimethylsilyl group is particularly preferred), or sulfur. $R^{25}$ is a monovalent aliphatic or alicyclic hydrocarbon group having 1 to 20 carbon atoms or a monovalent aromatic hydrocarbon group having 6 to 18 carbon atoms. $R^{27}$ is a monovalent aliphatic or alicyclic hydrocarbon group having 1 to 20 carbon atoms, a monovalent aromatic hydrocarbon group having 6 to 18 carbon atoms, or a halogen atom (fluorine, chlorine, bromine, or iodine). $R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, which may contain a nitrogen atom and/or a silicon atom, and these may be the same or different or may form a ring together when p2 is 2. $R^{28}$ is a divalent aliphatic or alicyclic hydrocarbon group having 1 to 20 carbon atoms or a divalent aromatic hydrocarbon group having 6 to 18 carbon atoms.

In addition, it is more desirable that the hydrocarbyloxysilane compound represented by the general formula (IV) is a hydrocarbyloxysilane compound represented by the following general formula (VI) or (VII).

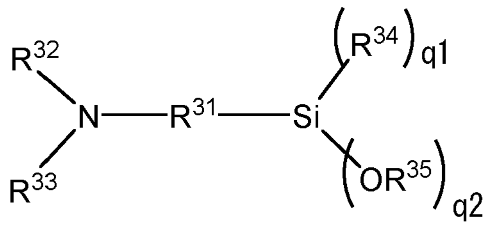

(VI)

In the formula, q1+q2=3 (in which, q1 is an integer of 0 to 2, and q2 is an integer of 1 to 3). $R^{31}$ is a divalent aliphatic or alicyclic hydrocarbon group having 1 to 20 carbon atoms or a divalent aromatic hydrocarbon group having 6 to 18 carbon atoms. Each of $R^{32}$ and $R^{33}$ is independently a hydrolyzable group, a monovalent aliphatic or alicyclic hydrocarbon group having 1 to 20 carbon atoms or a monovalent aromatic hydrocarbon group having 6 to 18 carbon atoms. $R^{34}$ is a monovalent aliphatic or alicyclic hydrocarbon group having 1 to 20 carbon atoms or a monovalent aromatic hydrocarbon group having 6 to 18 carbon atoms, and these may be the same or different when q1 is 2. $R^{35}$ is a monovalent aliphatic or alicyclic hydrocarbon group having 1 to 20 carbon atoms or a monovalent aromatic hydrocarbon group having 6 to 18 carbon atoms, and these may be the same or different when q2 is 2 or more.

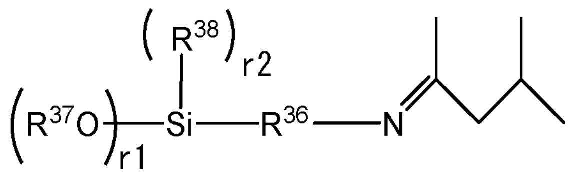

(VII)

In the formula, r1+r2=3 (in which, r1 is an integer of 1 to 3, and r2 is an integer of 0 to 2). $R^{36}$ is a divalent aliphatic or alicyclic hydrocarbon group having 1 to 20 carbon atoms or a divalent aromatic hydrocarbon group having 6 to 18 carbon atoms. $R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having 1 to 20 carbon atoms, or a monovalent aromatic hydrocarbon group having 6 to 18 carbon atoms, and these may be the same or different when r1 is 2 or more. $R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and these may be the same or

different when r2 is 2.

In addition, it is desirable that the hydrocarbyloxysilane compound represented by the general formula (IV) is a compound containing two or more nitrogen atoms, which is represented by the following general formula (VIII) or (IX).

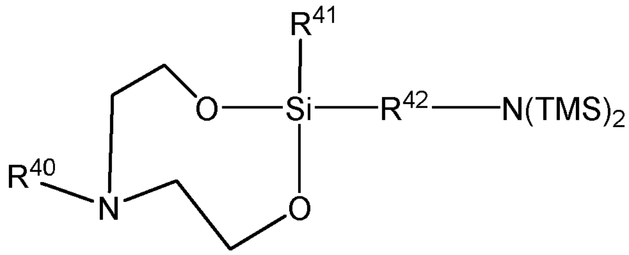

(VIII)

In the formula, TMS is a trimethylsilyl group. $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms. $R^{41}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms. $R^{42}$ is a divalent aliphatic or alicyclic hydrocarbon group having 1 to 20 carbon atoms or a divalent aromatic hydrocarbon group having 6 to 18 carbon atoms.

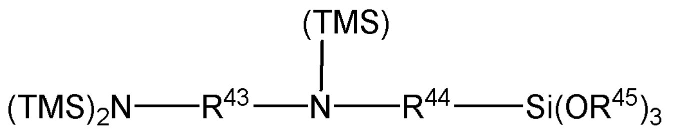

(IX)

In the formula, TMS is a trimethylsilyl group. Each of $R^{43}$ and $R^{44}$ is independently a divalent aliphatic or alicyclic hydrocarbon group having 1 to 20 carbon atoms or a divalent aromatic hydrocarbon group having 6 to 18 carbon atoms. $R^{45}$ is a monovalent aliphatic or alicyclic hydrocarbon group having 1 to 20 carbon atoms or a monovalent aromatic hydrocarbon group having 6 to 18 carbon atoms, and two or more $R^{45}$'s may be the same or different.

In addition, it is also desirable that the hydrocarbyloxysilane compound represented by the general formula (IV) is a hydrocarbyloxysilane compound represented by the following general formula (X).

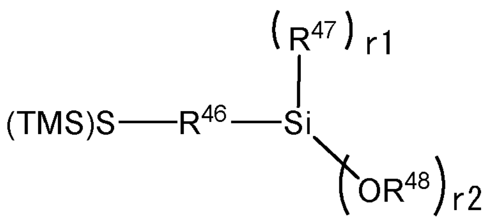

(X)

In the formula, r1+r2=3 (in which, r1 is an integer of 0 to 2, and r2 is an integer of 1 to 3), and TMS is a trimethylsilyl group. $R^{46}$ is a divalent aliphatic or alicyclic hydrocarbon group having 1 to 20 carbon atoms or a divalent aromatic hydrocarbon group having 6 to 18 carbon atoms. Each of $R^{47}$ and $R^{48}$ is independently a monovalent aliphatic or alicyclic hydrocarbon group having 1 to 20 carbon atoms or a monovalent aromatic hydrocarbon group having 6 to 18 carbon atoms. Two or more $R^{47}$'s or $R^{48}$'s may be the same or different.

In addition, it is desirable that the hydrocarbyloxysilane compound represented by the general formula (IV) is a compound represented by the following general formula (XI).

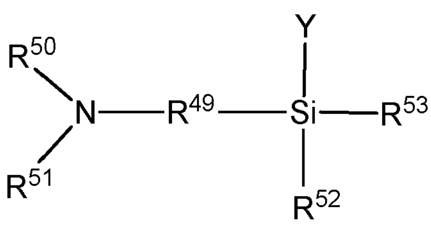

(XI)

In the formula, Y is a halogen atom. $R^{49}$ is a divalent aliphatic or alicyclic hydrocarbon group having 1 to 20 carbon atoms or a divalent aromatic hydrocarbon group having 6 to 18 carbon atoms. Each of $R^{50}$ and $R^{51}$ is independently a

hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ are bonded to form a divalent organic group. Each of $R^{52}$ and $R^{53}$ is independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms. As $R^{50}$ and $R^{51}$, hydrolyzable groups are preferred, and as the hydrolyzable group, a trimethylsilyl group or a tert-butyldimethylsilyl group is preferred, and a trimethylsilyl group is particularly preferred.

It is desirable that the hydrocarbyloxysilane compounds represented by the general formulas (IV) to (XI) are used when a modified rubber component is produced by anionic polymerization.

In addition, it is desirable that the hydrocarbyloxysilane compounds represented by the general formulas (IV) to (XI) are alkoxysilane compounds.

When a diene-based polymer is modified by anionic polymerization, a preferred modifier is not particularly limited, and may be properly selected according to purposes. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. The modifier may be used alone or in combination of two or more thereof.

It is desirable that the hydrocarbyloxysilane compound is an amide moiety of a lithium amide compound used as a polymerization initiator in the anionic polymerization.

The lithium amide compound is not particularly limited and may be properly selected according to purposes. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide. For example, a modifier that becomes an amide moiety of lithium hexamethyleneimide is hexamethyleneimine, a modifier that becomes an amide moiety of lithium pyrrolidide is pyrrolidine, and a modifier that becomes an amide moiety of lithium piperidide is piperidine. The lithium amide compound may be used alone or in combination of two or more thereof.

-Modifying Functional Group Containing Oxygen Atom-

The modifying functional group containing an oxygen atom is not particularly limited and may be properly selected according to purposes. Examples thereof include: alkoxy groups such as a methoxy group, an ethoxy group, an n-propoxy group, an isopropoxy group, an n-butoxy group, a sec-butoxy group, and a t-butoxy group; alkoxyalkyl groups such as a methoxymethyl group, a methoxyethyl group, an ethoxymethyl group, and an ethoxyethyl group; alkoxyaryl groups such as a methoxyphenyl group, and an ethoxyphenyl group; alkyleneoxide groups such as an epoxy group, and a tetrahydrofuranyl group; and trialkylsilyloxy groups such as a trimethylsilyloxy group, a triethylsilyloxy group, and a t-butyldimethylsilyloxy group. The modifying functional group may be used alone or in combination of two or more thereof.

From the viewpoint of allowing the SB phase to contain a large amount of filler, it is desirable that either or both of polybutadiene rubber or/and styrene-butadiene copolymer rubber is/are individually silane-modified. Specifically, it is desirable that each of the polybutadiene rubber and the styrene-butadiene copolymer rubber is a rubber component modified with the hydrocarbyloxysilane compounds represented by the general formulas (IV) to (XI).

The rubber component may contain rubber (referred to as another rubber) other than natural rubber, polybutadiene rubber, and styrene-butadiene copolymer rubber.

Examples of the other synthetic rubber include synthetic isoprene rubber, ethylene propylene diene ternary copolymer rubber, chloroprene rubber, butyl rubber, halogenated butyl rubber, and acrylonitrile-butadiene rubber. The synthetic diene-based rubber may be used alone or in combination of two or more thereof.

The mass n of the natural rubber in the rubber component is 35% by mass to 44% by mass, and the mass b of the polybutadiene rubber, and the mass s of the styrene-butadiene copolymer rubber satisfy the relationship of $s \leq b$.

The unit of the mass n, the mass b, and the mass s is "% by mass."

If the mass n of the natural rubber in the rubber component is less than 35% by mass, the strength of the rubber is lowered and the wear resistance is lowered, and thus it is impossible to achieve both the on-ice performance and the wear resistance.

If the mass n of the natural rubber in the rubber component is greater than 44% by mass, the obtained tire becomes hard at a low temperature, and the tire is hardly deformed, and thus, the on-ice performance is degraded. Therefore, the balance between on-ice performance and wear resistance is insufficient.

From the viewpoint, it is desirable that the mass n of the natural rubber in the rubber component is 35 to 44% by mass, the mass b of the polybutadiene rubber is 33 to 60% by mass, and the mass s of the styrene-butadiene copolymer rubber is 3 to 32% by mass. The total of n, b and s does not exceed 100% by mass [$(n+b+s) \leq 100$].

More preferably, the mass b of the polybutadiene rubber is 35 to 50% by mass, and the mass s of the styrene-butadiene copolymer rubber is 5 to 25% by mass.

It is desirable that the ratio (b/s) of the mass b of the polybutadiene rubber to the mass s of the styrene-butadiene copolymer rubber is 1.0 to 2.0. When the amount s of the styrene-butadiene copolymer rubber is equal to or less than the amount b of the polybutadiene rubber, an excessive increase of the modulus of elasticity of the SB phase is suppressed, and then the modulus of elasticity of the tire under a low temperature environment is easily reduced.

It is desirable that the ratio [vi/a] of the vinyl bond content vi (%) of the rubber component to the content a (parts by mass) of the rubber component is 8 or more.

The unit of the content a of the rubber component is "parts by mass." [vi/a] is calculated by the following formula.

$$[(a_b \times vi_b)+(a_{sb} \times vi_{sb})]/a$$

In the formula,

$a_b$ is the content (parts by mass) of the polybutadiene rubber,
$vi_b$ is the vinyl bond content (%) of the polybutadiene rubber,
$a_{sb}$ is the content (parts by mass) of the styrene-butadiene copolymer rubber, and
$vi_{sb}$ is the vinyl bond content (%) of the styrene-butadiene copolymer rubber.

The unit of the contents $a_b$, and $a_{sb}$ is "parts by mass."

When vi/a is 8 or more, the modulus of elasticity of the tire at a low temperature is further lowered, and the tire is easily deformed. Thus, the hysteresis loss at a low temperature may be increased, and the braking effect is also easily exhibited.

In addition, from the viewpoint of more easily achieving the effect of the present invention, it is desirable that the ratio (b/s) of the mass b of the polybutadiene rubber to the mass s of the styrene-butadiene copolymer rubber is 1.0 to 2.0, and also, the ratio [vi/a] of the vinyl bond content vi (%) of the rubber component to the content a of the rubber component is 8 or more.

The vinyl bond content vi (%) of the rubber component may be obtained by an infrared method (Morero method).

The ratio (st/s) of the styrene bond content st (%) of the rubber component to the mass s of the styrene-butadiene copolymer rubber is preferably 1.0 or less, more preferably 0.7 or less, further preferably 0.6 or less.

When st/s is 1.0 or less, since the rigidity of the styrene-butadiene copolymer rubber is relieved, the modulus of elasticity of the tire under a low temperature environment may be further lowered and the on-ice braking performance is easily improved.

The styrene bond content st (% by mass) of the rubber component may be obtained by $^1$H-NMR, an infrared method (Morero method) or the like.

[Filler]

The rubber composition of the present invention contains a filler containing at least silica.

When the filler does not contain silica, the low fuel consumption characteristic of the tire becomes insufficient.

From the viewpoint of the wear resistance of the tire, the filler content in the rubber composition is preferably 50 parts by mass or more per 100 parts by mass of the rubber component, more preferably 60 parts by mass or more, further preferably 65 parts by mass or more. In addition, from the viewpoint of the flexibility of the tire and the on-ice performance, the filler content in the rubber composition is preferably 100 parts by mass or less, more preferably 90 parts by mass or less, further preferably 85 parts by mass or less.

The filler is not particularly limited as long as it contains silica, and, for example, a reinforcing filler that reinforces the rubber composition is used. Examples of the reinforcing filler include not only silica, but also white fillers such as aluminum hydroxide and calcium carbonate; and carbon black.

As the filler, silica may be used alone, or both silica and carbon black may be used.

In addition, it is desirable that the phase (SB phase) containing the polybutadiene rubber and the styrene-butadiene copolymer rubber contains 50% by mass or more of the total content of silica.

When the amount of the silica contained in the SB phase is 50% by mass or more of the total of silica, the NR phase may be flexible and then the modulus of elasticity of the tire at a low temperature may be lowered.

The amount of the silica contained in the SB phase is preferably greater than 50% by mass, more preferably 60% by mass or more, further preferably 70% by mass or more.

The amount of the filler containing silica contained in the SB phase (filler distribution rate) may be measured by the following method.

The filler distribution rate in the rubber composition is close to the filler distribution rate in a vulcanized rubber, and

thus the vulcanized rubber obtained by vulcanizing the rubber composition may be used as a measurement sample to measure the filler distribution rate.

For example, after the sample is cut in a direction in which an angle of 38° is formed with respect to the upper surface of the sample, the smooth surface of the corresponding sample, which is formed by cutting, is photographed by a scanning electronic microscope (SEM) [for example, manufactured by Carl Zeiss, product name "Ultra55"] in a direction perpendicular to the corresponding smooth surface, by using a focused ion beam, at an acceleration voltage of 1.8 to 2.2V.

The obtained SEM image may be subjected to image processing, and analyzed so as to measure the filler distribution rate. There are several analysis methods, but, for example, the following analysis method is applicable in the present invention.

When a system in which the rubber component is divided into two phases such as the NR phase and the SB phase in the present invention is measured, one method may be considered in which the obtained SEM image is converted through a histogram into a three-value image with two types of rubber components and a filler portion, and image analysis is performed on the basis of the obtained three-value image. In such a case, the peripheral length of the filler contained in each of two types of rubber component phases is obtained, and the ratio of the filler present in one rubber component phase is calculated from the total amount of the filler within the measurement area. When the filler is present on the interface between two types of rubber components, two points where three of the rubber components and the filler are in contact with each other are connected to divide the peripheral length of the filler. Particles of 20 pixels or less are regarded as noise and are not counted.

(Carbon Black)

The carbon black is not particularly limited and may be properly selected according to purposes. For example, as the carbon black, those of FEF, SRF, HAF, ISAF, and SAF grades are preferred, and those of HAF, ISAF, and SAF grades are more preferred.

(Silica)

As the type of the silica, general grade silica, or special silica subjected to surface treatment with a silane coupling agent, may be used depending on the application.

The CTAB (cetyl trimethyl ammonium bromide) specific surface area of the silica is preferably 120 $m^2/g$ or more, more preferably 140 $m^2/g$ or more, further preferably 150 $m^2/g$ or more, still more preferably 180 $m^2/g$ or more. In addition, the CTAB specific surface area of the silica is preferably 600 $m^2/g$ or less, more preferably 300 $m^2/g$ or less, particularly preferably 270 $m^2/g$ or less. When the CTAB specific surface area of the silica is 140 $m^2/g$ or more, the wear resistance of the tire is excellent. In addition, when the CTAB specific surface area of the silica is 600 $m^2/g$ or less, the rolling resistance decreases.

The silica is not particularly limited, and examples thereof include wet method silica (hydrous silicate), dry method silica (anhydrous silicate), calcium silicate, and aluminum silicate. Among these, wet method silica is preferred. The silica may be used alone or in combination of two or more thereof.

In the rubber composition of the present invention, the silica may be silica in which the CTAB specific surface area ($m^2/g$) [in the formula (Y), simply expressed as "CTAB"] and the ink bottle-shaped pore index (IB) satisfy the relationship of the following formula (Y):

$$IB \leq -0.36 \times CTAB + 86.8 \qquad (Y)$$

Here, the CTAB specific surface area ($m^2/g$) means a value measured in accordance with ASTM D3765-92. However, since ASTM D3765-92 is a method for measuring the CTAB of carbon black, in the present invention, instead of a standard product IRB # 3 (83.0 $m^2/g$), a standard solution of cetyl trimethyl ammonium bromide (hereinafter, abbreviated as CE-TRAB) is separately prepared, and accordingly, a silica OT(di-2-ethylhexyl sodium sulfosuccinate) solution is standardized. When the adsorption sectional area of CE-TRAB per molecule on the silica surface is 0.35 $nm^2$, the specific surface area ($m^2/g$) calculated from the adsorption amount of CE-TRAB is set as the value of CTAB. This is because the carbon black and the silica have different surfaces, and thus it may be thought that the adsorption amount of CE-TRAB varies even when the surface areas are the same.

In addition, the ink bottle-shaped pore index (IB) means a value obtained by the following equation (Z) when measurement using a mercury porosimeter based on a mercury intrusion porosimetry is performed on silica having pores with openings (diameter in range of $1.2 \times 10^5$ nm to 6 nm) on the outer surface thereof:

$$IB = M2 - M1 \quad \cdots (Z)$$

in which the opening diameter (M1) (nm) indicates the maximum value of a mercury press-injection amount when the pressure is increased from 1 PSI to 32000 PSI, and the opening diameter (M2) (nm) indicates the maximum value of a mercury discharge amount when the pressure is decreased from 32000 PSI to 1 PSI. The measurement using the mercury porosimeter based on the mercury intrusion porosimetry is a useful method because it is simpler and more excellent in quantitativeness than measurement using an electronic microscope, which has been conventionally frequently employed to evaluate shapes of pores.

In general, a silica particle has a large number of concave-shaped pores with openings on the outer surface thereof. FIG. 1 illustrates a schematic view imitating the shapes of these pores in the cross section in the inward direction of the silica particle. These concave-shaped pores in the cross section in the inward direction of the particle have various shapes. A pore A has a substantially cylindrical shape in the cross section in the inward direction of the particle, that is, a shape in which an opening diameter Ma on the outer surface of the particle is substantially the same as a pore diameter (inner diameter) Ra inside the particle. On the other hand, a pore B has an ink bottle shape in the cross section in the inward direction of the particle, that is, a shape in which an opening diameter Mb on the outer surface of the particle is narrower than a pore diameter (inner diameter) Rb inside the particle. However, for the pore B having the ink bottle shape in the cross section in the inward direction of the particle, it is difficult for rubber molecular chains to penetrate from the outer surface of the particle to the inside. Thus, when the silica is blended with the rubber component, the rubber molecular chains may not be sufficiently adsorbed on the silica. Therefore, when the number of the pores B having the ink bottle shapes is reduced, and the number of the pores A having the substantially cylindrical shapes in the cross section in the inward direction of the particle is increased, it is possible to efficiently promote the penetration of the rubber molecular chains. Then, without increasing tan $\delta$, it is possible to exhibit a sufficient reinforcing property, and to contribute to the wear resistance improvement of the tire.

From the viewpoint, in the present invention, the ink bottle-shaped pore index (IB) is defined in relation to the silica to be blended with the rubber component so as to reduce the number of the pores B having the ink bottle-shapes in the cross section in the inward direction of the particle. As described above, when the pressure is increased in the measurement using the mercury porosimeter based on the mercury intrusion porosimetry, in the pore Ahaving the substantially cylindrical shape, since the outer surface opening is open, mercury is easily press-injected into the pore, whereas in the pore B having the ink bottle shape, since the outer surface opening is closed, mercury is hardly press-injected into the pore. Meanwhile, when the pressure is decreased, for the same reasons, in the pore A having the substantially cylindrical shape, mercury is easily discharged from the inside of the pore to the outside of the pore, whereas in the pore B having the ink bottle shape, mercury is hardly discharged from the inside of the pore to the outside of the pore.

Therefore, as illustrated in FIG. 2, in the measurement using the mercury porosimeter based on the mercury intrusion porosimetry, hysteresis occurs in the press-injection discharge curves C-D of mercury. That is, under a relatively low pressure, mercury is gradually press-injected into the pores A having the substantially cylindrical shapes, whereas at a point in time when a certain pressure is reached, mercury is press-injected at once into pores other than the pores having the substantially cylindrical shapes, including the ink bottle-shaped pores B which mercury has hardly penetrated until then. Then, the press-injection amount rapidly increases, and the press-injection curve C of the mercury is drawn in the case where the vertical axis is a differential mercury press-injection amount (-dV/d(log d)), and the horizontal axis is an opening diameter d (nm) in the silica pore. Meanwhile, when the pressure is gradually decreased after the pressure is sufficiently increased, a state where the mercury is hardly discharged is continued under a relatively high pressure, whereas at a point in time when a certain pressure is reached, the mercury which has been press-injected into the pores is discharged to the outside of the pores at once. Then, the discharge amount rapidly increases, and the discharge curve D of the mercury is drawn in the case where the vertical axis is a differential mercury discharge amount (-dV/d(log d)), and the horizontal axis is an opening diameter M (nm) in the silica pore. Once press-injected into the pores, the mercury tends to be hardly discharged to the outside of the pores when the pressure drops. Thus, when the pressure drops, an increase of the discharge amount is seen at a position of a diameter (M2) having a larger value than a position of a diameter (M1) where an increase of the press-injection amount is seen at the time of rising. A difference (M2-M1) between these diameters corresponds to IB in FIG. 2. In particular, in the pores B having the ink bottle shapes, there is a significant tendency that the press-injected mercury is hardly discharged. Although the mercury is press-injected into the pores B when the pressure rises, the mercury is hardly discharged to the outside of the pores B when the pressure drops.

Such a measurement method is adopted, and the mercury press-injection discharge curves C-D drawn due to properties of the pores are utilized so as to obtain, according to the equation (Z), the difference IB between the opening diameter (M1) (nm) indicating the maximum value of the mercury press-injection amount when the pressure is increased from 1 PSI to 32000 PSI, and the opening diameter (M2) (nm) indicating the maximum value of the mercury discharge amount when the pressure is decreased from 32000 PSI to 1 PSI, in the measurement using the mercury porosimeter based on the mercury intrusion porosimetry. Such a value apparently indicates the difference between these diameters (length: nm) but substantially means a pore index indicating the abundance ratio of the ink bottle-shaped pores B present on silica. That is, as the occupation abundance ratio of the ink bottle-shaped pores B having sufficiently narrow openings decreases, the mercury press-injection amount and the mercury discharge amount approach almost the same amounts.

Thus, a difference between the opening diameter (M1) indicating the maximum value of the mercury press-injection amount and the opening diameter (M2) indicating the maximum value of the mercury discharge amount is decreased and the IB value is decreased. Meanwhile, as the occupation abundance ratio of the ink bottle-shaped pores B increases, the mercury discharge amount is smaller than the mercury press-injection amount. Thus, a difference between the opening diameter (M1) indicating the maximum value of the mercury press-injection amount and the opening diameter (M2) indicating the maximum value of the mercury discharge amount is increased and the IB value is increased.

Such an IB has a characteristic in that fluctuation may also be made according to the CTAB value. Thus, as the CTAB increases, the IB value tends to be decreased. Therefore, it is desirable that the silica used in the present invention satisfies the formula (Y) [$IB \leq -0.36 \times CTAB + 86.8$]. On the silica in which IB and CTAB satisfy the formula (Y), the number of the ink bottle-shaped pores B having narrow openings is effectively reduced, and the occupation abundance ratio of the pores A having the substantially cylindrical shapes is increased. This allows sufficient penetration and adsorption of the rubber molecular chains, and then it is possible to exhibit a sufficient reinforcing property, and to achieve the contribution to improvement of wear resistance of the tire.

It is desirable that the CTAB specific surface area of silica satisfying the formula (Y) is preferably 180 $m^2/g$ or more. When the CTAB specific surface area is 180 $m^2/g$ or more, the storage modulus of the rubber composition is further improved, and the wear resistance of the tire to which the corresponding rubber composition is applied may be further improved. In addition, when the CTAB specific surface area is 300 $m^2/g$ or less, silica may be satisfactorily dispersed in the rubber component, and the processability of the rubber composition is improved.

The rubber composition of the present invention may further contain a silane coupling agent. As for the silane coupling agent, a silane coupling agent usually used in the rubber industry may be used.

When, for example, carbon black is contained as the filler, the carbon black distribution rate (hereinafter, referred to as "CB distribution rate") in the SB phase is preferably 70% by mass or more of the total of the carbon black, more preferably 80% by mass or more.

In addition, when, for example, silica is contained as the filler, the silica distribution rate (hereinafter, referred to as "Si distribution rate") in the SB phase is preferably 52% by mass or more of the total of the silica, more preferably 55% by mass or more.

The CB distribution rate and the Si distribution rate may be measured by the method described in Examples.

In addition, the ratio (si/cb) of the mass si of silica to the mass cb of carbon black is preferably 0.1 to 1.2.

[Low Molecular Weight Conjugated Diene-Based Polymer]

The rubber composition of the present invention contains 1 to 40 parts by mass of unmodified conjugated diene-based polymer per 100 parts by mass of the rubber component, in which the weight average molecular weight measured by gel permeation chromatography in terms of polystyrene is 5,000 or more and less than 40,000, the styrene bond content of a conjugated diene compound portion is less than 10% by mass, and the vinyl bond content of the conjugated diene compound portion is 40% to 65% by mass.

When the rubber composition of the present invention contains the low molecular weight conjugated diene-based polymer, the vulcanized rubber and the tire may be flexible, and the hysteresis loss at a low temperature may be improved. Then, the gripping force on an ice-snow road surface is improved, and the on-ice performance is excellent.

Further, "the weight average molecular weight measured by gel permeation chromatography in terms of polystyrene" may be simply referred to as "a weight average molecular weight in terms of polystyrene" or "a weight average molecular weight."

The low molecular weight conjugated diene-based polymer having a weight average molecular weight of less than 40,000 is usually a liquid polymer that acts as a softener, and does not have an elastic force even when vulcanized.

Meanwhile, the natural rubber, the polybutadiene rubber, and the styrene-butadiene copolymer rubber as rubber components common for the "conjugated diene-based polymer" are solid compounds having an elastic force through vulcanization. In addition, the weight average molecular weight of the rubber component is at least 200,000 or more, usually about 300,000.

When the weight average molecular weight of the low molecular weight conjugated diene-based polymer is less than 5,000, the flexibility of the vulcanized rubber and the tire is excessively advanced, and the wear resistance is not excellent. When the weight average molecular weight of the low molecular weight conjugated diene-based polymer is greater than 40,000, the flexibility of the vulcanized rubber and the tire is insufficient.

From the viewpoint of improving the on-ice performance and the wear resistance of the tire in a well-balanced manner, the weight average molecular weight of the low molecular weight conjugated diene-based polymer is preferably 6,000 or more, more preferably 7,000 or more, further preferably 8,000 or more. In addition, from the same viewpoint, the weight average molecular weight of the low molecular weight conjugated diene-based polymer is preferably 30,000 or less, more preferably 24,000 or less, further preferably 19,000, still more preferably 14,500 or less.

In the low molecular weight conjugated diene-based polymer, the styrene bond content of the conjugated diene

compound portion is less than 10% by mass. When the styrene bond content of the conjugated diene compound portion in the low molecular weight conjugated diene-based polymer is 10% by mass or more, the flexibility of the vulcanized rubber and the tire is insufficient, and the on-ice performance is not excellent.

The styrene bond content of the conjugated diene compound portion in the low molecular weight conjugated diene-based polymer is preferably 8% by mass or less, more preferably 5% by mass or less, further preferably 3% by mass or less, particularly preferably 0% by mass.

The styrene bond content (% by mass) may be obtained by $^1$H-NMR, an infrared method (Morero method) or the like.

In the low molecular weight conjugated diene-based polymer, the vinyl bond content of the conjugated diene compound portion is 40% to 65% by mass. When the vinyl bond content of the conjugated diene compound portion in the low molecular weight conjugated diene-based polymer is less than 40% by mass, the vulcanized rubber and the tire are not excellent in the hysteresis loss at a low temperature, and are not excellent in the on-ice performance. Meanwhile, when the vinyl bond content of the conjugated diene compound portion in the low molecular weight conjugated diene-based polymer is greater than 65% by mass, the vulcanized rubber and the tire are not excellent in the flexibility at a low temperature, and are not excellent in the on-ice performance.

The vinyl bond content of the conjugated diene compound portion in the low molecular weight conjugated diene-based polymer is preferably 43% by mass or more, more preferably 45% by mass or more, further preferably 50% by mass or more. In addition, the vinyl bond content of the conjugated diene compound portion in the low molecular weight conjugated diene-based polymer is preferably 63% by mass or less, more preferably 61% by mass or less, further preferably 59% by mass or less.

The vinyl bond content (% by mass) may be obtained by an infrared method (Morero method).

The low molecular weight conjugated diene-based polymer is unmodified.

When the low molecular weight conjugated diene-based polymer is modified, the balance between flexibility and hysteresis loss at a low temperature is not excellent and the on-ice performance is not excellent.

The low molecular weight conjugated diene-based polymer may contain a bonding site derived from a styrene monomer as long as the styrene bond content is less than 10% by mass, or may be a styrene-butadiene copolymer, but polybutadiene, polyisoprene, or the like which has a styrene bond content of 0% by mass is preferred, and polybutadiene is more preferred.

The content of the low molecular weight conjugated diene-based polymer in the rubber composition is 1 to 40 parts by mass per 100 parts by mass of the rubber component.

When the content is less than 1 part by mass per 100 parts by mass of the rubber component, the vulcanized rubber and the tire do not become flexible and the on-ice performance is degraded. When it is greater than 40 parts by mass, the rigidity of the vulcanized rubber and the tire is lowered, and the wear resistance is lowered.

The content of the low molecular weight conjugated diene-based polymer in the rubber composition is preferably 5 to 30 parts by mass per 100 parts by mass of the rubber component, more preferably 7 to 25 parts by mass.

[Resin]

It is desirable that the rubber composition of the present invention contains a resin.

When the rubber composition of the present invention contains the resin, the modulus of elasticity of the obtained vulcanized rubber and the tire at a low temperature may be further lowered. Then, the tire that tends to be hard on ice is easily adapted to the unevenness of the road surface, and thus, the braking performance on ice may be further increased.

Examples of the resin include a C5-based resin; a C5/C9-based resin; a C9-based resin; a phenol resin; a terpene-based resin; and a terpene aromatic compound-based resin. The resin may be used alone or in combination of two or more thereof.

Examples of the C5-based resin include an aliphatic hydrocarbon resin and an alicyclic hydrocarbon resin.

Examples of the aliphatic hydrocarbon resin include a petroleum resin produced by polymerizing a C5-based petroleum fraction. A petroleum resin produced by using high-purity 1,3-pentadiene as a main raw material, may be exemplified by "Quintone 100" series (product name; A100, B170, K100, M100, R100, N295, U190, S100, D100, U185, P195N) manufactured by ZEON Corporation. In addition, examples of a petroleum resin produced by polymerizing another C5-based petroleum fraction include "Escorez" series (product name; 1102, 1202(U), 1304, 1310, 1315, 1395) manufactured by Exxon Mobil Corporation, and "HILET" series (product name; G-100X, -T-100X, -C-110X, -R-100X) manufactured by Mitsui Chemicals, Inc.

Examples of the alicyclic hydrocarbon resin include a cyclopentadiene-based petroleum resin produced by using cyclopentadiene extracted from a C5 fraction as a main raw material or a dicyclopentadiene-based petroleum resin produced by using dicyclopentadiene in the C5 fraction as a main raw material. Examples of the cyclopentadiene-based petroleum resin produced by using high-purity cyclopentadiene as a main raw material, include "Quintone 1000" series (product name; 1325, 1345) manufactured by ZEON Corporation. In addition, examples of the dicyclopentadiene-based

petroleum resin include "MARUKAREZ M" series (product name; M-890A, M-845A, M-990A) of Maruzen Petrochemical Co., Ltd.

Examples of the C5/C9-based resin include a C5/C9-based synthetic petroleum resin. Specific examples thereof include solid polymers obtained by polymerizing petroleum-derived C5 to C11 fractions by using a Friedel-Crafts catalyst such as $AlCl_3$, or $BF_3$. More specific examples thereof include copolymers using styrene, vinyltoluene, α-methylstyrene, and indene, as main components. As the C5/C9-based resin, a resin having a small amount of C9 or higher components is desirable from the viewpoint of compatibility with the diene-based polymer. Here, "the small amount of C9 or higher components" means that C9 or higher components account for less than 50% by mass, preferably 40% by mass or less in the total amount of the resin. As the C5/C9-based resin, commercially available products may be used, and examples thereof include "Quintone (product name, registered trademark) G100B" (manufactured by ZEON Corporation), and "ECR213" (product name, manufactured by Exxon Mobil Chemical Company).

As the C9-based resin, a C9-based synthetic petroleum resin may be exemplified, and examples thereof include solid polymers obtained by polymerizing a C9 fraction by using a Friedel-Crafts type catalyst such as $AlCl_3$, or $BF_3$, and copolymers using indene, methylindene, α-methylstyrene, and vinyltoluene, as main components.

As the phenol resin, a phenol-formaldehyde resin, a resorcin formaldehyde resin, and a cresol-formaldehyde resin, are preferred, and a phenol-formaldehyde resin is particularly preferred.

The terpene-based resin refers to a resin produced by using naturally-derived turpentine oil or orange oil as a main raw material, and examples thereof include "YS resin" series (product name; PX-1250, TR-105), manufactured by YASUHARA CHEMICAL CO., LTD., and "Picolite" series (product name; A115, S115) manufactured by Hercules Corporation.

Examples of the terpene aromatic compound-based resin include a terpene phenol resin, and specific examples thereof include "YS POLYSTER" series (product name; U series such as U-130, and U-115, and T-series such as T-115, T-130, and T-145) manufactured by YASUHARA CHEMICAL CO., LTD., and "TAMANOL 901" (product name) manufactured by Arakawa Chemical Industries, Ltd.

From the viewpoint of making the NR phase more flexible, and further lowering the modulus of elasticity of the tire at a low temperature, it is desirable that the resin is contained in the NR phase. In addition, from the viewpoint of facilitating distribution of the resin in the NR phase, it is desirable that as the resin, a resin having an isoprene skeleton as a main skeleton is used. Specific examples thereof include at least one type selected from the group consisting of a C5-based resin and a terpene-based resin. Among these, a C5-based resin is preferred.

The content of the resin in the rubber composition is not particularly limited but is preferably 5 to 60 parts by mass per 100 parts by mass of the rubber component, more preferably 8 to 50 parts by mass, further preferably 10 to 40 parts by mass.

In addition, from the viewpoint of achieving both the low modulus of elasticity at a low temperature and the high hysteresis loss at a low temperature, and the viewpoint of further improving the on-ice performance and the wear resistance of the tire when the rubber composition is applied to a tread, it is desirable that the ratio (rs/si) of the mass rs (parts by mass) of the resin to the mass si (parts by mass) of the silica is 0.1 to 1.2.

[Void Introducing Agent]

It is desirable that the rubber composition of the present invention contains a void introducing agent.

When the rubber composition contains a void introducing agent, since the vulcanized rubber has voids on the surface or inside, or the surface and inside, the tire using the corresponding vulcanized rubber has flexibility, and easily comes in close contact with an ice road surface. At the same time, water on the road surface is sucked into voids of the tire surface, and the water is easily removed from the ice-snow road surface, and thus, the braking performance of a brake on ice may be improved.

Examples of the void introducing agent include a foaming agent, metal sulfate, thermally expandable microcapsules, and porous cellulose particles, and among these, only one type or a mixture of two or more types may be used. From the viewpoint of the on-ice performance, it is desirable that the foaming agent is used.

The content of the void introducing agent in the rubber composition is not particularly limited, but is preferably 0.1 to 20 parts by mass, more preferably 1 to 10 parts by mass per 100 parts by mass of the rubber component from the viewpoint of the on-ice performance (the braking performance of a brake on ice).

(Foaming Agent)

When the rubber composition contains a foaming agent, bubbles are generated in the vulcanized rubber by the foaming agent during vulcanizion of the rubber composition, and the vulcanized rubber may become foamed rubber. Since the foamed rubber has flexibility, the tire surface using the vulcanized rubber easily comes in close contact with the ice road surface. In addition, bubble-derived holes (foamed holes) are generated on the vulcanized rubber surface and the tire

surface by the bubbles and function as a water channel for water drainage.

Specific examples of the foaming agent include azodicarbonamide (ADCA), dinitrosopentamethylenetetramine (DPT), dinitrosopentastyrenetetramine or benzenesulfonyl hydrazide derivatives, p,p'-oxybisbenzenesulfonyl hydrazide (OBSH), ammonium bicarbonate, sodium bicarbonate, and ammonium carbonate which generate carbon dioxide, and nitrososulfonyl azo compounds, N,N'-dimethyl-N,N'-dinitrosophthalamide, toluene sulfonyl hydrazide, p-toluene sulfonyl semicarbazide, and p,p'-oxybisbenzenesulfonyl semicarbazide, which generate nitrogen. Among these, azodicarbonamide (ADCA), and dinitrosopentamethylenetetramine (DPT) are preferred from the viewpoint of manufacturing processability. The foaming agent may be used alone or in combination of two or more thereof.

In addition, the content of the foaming agent in the rubber composition is not particularly limited, but is preferably 1 to 10 parts by mass, more preferably 2 to 8 parts by mass per 100 parts by mass of the rubber component.

The rubber composition may also use urea, zinc stearate, zinc benzenesulfinate, zinc oxide or the like as a foaming auxiliary. The rubber composition may be used alone or in combination of two or more thereof. A combined use of the foaming auxiliary promotes a foaming reaction and increases the level of completion of the reaction so that unnecessary deterioration may be suppressed with the lapse of time.

In the vulcanized rubber obtained after the rubber composition containing the foaming agent is vulcanized, the foaming rate is generally 1 to 50%, preferably 5 to 40%. In blending with the foaming agent, when the foaming rate is 50% or less, voids on the rubber surface do not become too large, and a sufficient ground contact area may be secured. Then, the formation of bubbles effectively functioning as a drainage ditch may be secured, while the amount of the bubbles may be suitably maintained so that there is no risk of impairing the durability. Here, the foaming rate of the vulcanized rubber means an average foaming rate Vs, specifically means a value calculated by the following equation (1).

$$Vs=(\rho_0/\rho_1-1)\times 100(\%) \quad (1)$$

In the equation (1), $\rho_1$ represents the density (g/cm$^3$) of the vulcanized rubber (foamed rubber), and $\rho_0$ represents the density (g/cm$^3$) of a solid phase portion in the vulcanized rubber (foamed rubber). The density of the vulcanized rubber and the density of the solid phase portion in the vulcanized rubber are calculated by measuring the mass of the vulcanized rubber in ethanol and the mass of the vulcanized rubber in air. In addition, the foaming rate may be properly changed according to the type, and the amount, of the foaming agent or the foaming auxiliary.

(Metal Sulfate)

When the rubber composition contains metal sulfate, the metal sulfate protrudes from the surface of the tire obtained by vulcanizing the rubber composition and functions as a claw without disadvantage of abrasion. Then, subsequently, as the metal sulfate gradually exits from the rubber matrix, cavities are generated and function as a storage volume and a passage for discharging a water film on the ice surface. Under these conditions, contact between the tire surface (for example, the tread surface) and the ice is no longer lubricated, and thus, the coefficient of friction is improved.

Examples of the metal sulfate include magnesium sulfate and potassium sulfate.

The metal sulfate is preferably micrometer-size particles. Specifically, it is desirable that the average particle size and the median particle size (both are indicated by mass) are 1 μm to 1 mm, and it is more desirable that the median particle size is 2 μm to 800 μm.

When the average particle size and the median particle size are 1 μm or more, a targeted technical effect (that is, formation of appropriate fine roughness) is easily obtained. In addition, when the average particle size and the median particle size are 1 mm or less, in particular, in a case where the rubber composition is used as a tread, degradation of an aesthetic quality is suppressed (the appearance of too obvious particles on the tread surface may be suppressed), and the grip performance on the melting ice is hardly impaired.

For all these reasons, the median particle size of the metal sulfate is preferably 2 μm to 500 μm, more preferably 5 to 200 μm. This particularly preferred particle size range seems to correspond to an optimum compromise between a desired surface roughness in one aspect, and a good contact between the rubber composition and the ice in the other aspect.

Furthermore, for the same reasons as the above-described reasons, the content of the metal sulfate in the rubber composition is preferably 5 to 40 parts by mass, more preferably 10 to 35 parts by mass per 100 parts by mass of the rubber component.

For example, conventionally known various methods by laser diffraction are applicable to analyze the particle size and to calculate the median particle size of fine particles (or the average diameter of fine particles assumed to be substantially spherical) (see e.g., standard ISO-8130-13 or standard JIS K5600-9-3).

In addition, the particle size analysis using mechanical sieving may also be simply preferably used; the operation

is performed by sieving a specified amount of sample (for example, 200 g) on a vibration table for 30 min, by various sieve diameters (for example, with meshes of 1000, 800, 630, 500, 400, ...100, 80, and 63 μm according to a progressive ratio equal to 1.26); an excess size collected from each sieve is weighed by a precise balance; % of the excess size at each mesh diameter to the total mass of a material is estimated from the weighing; and finally, the median particle size (or median diameter) or the average particle size (or average diameter) is calculated from a histogram of particle size distribution by a conventionally known method.

(Thermally Expandable Microcapsules)

A thermally expandable microcapsule has a structure where a thermally expandable substance is encapsulated in a shell material formed of a thermoplastic resin. The shell material of the thermally expandable microcapsule may be formed of a nitrile-based polymer.

In addition, the thermally expandable substance encapsulated in the shell material of the microcapsule has a characteristic of being vaporized or expanded by heat, and, examples thereof include at least one type selected from the group consisting of hydrocarbons such as isoalkane, and normal alkane. Examples of isoalkane include isobutane, isopentane, 2-methylpentane, 2-methylhexane, and 2,2,4-trimethylpentane, and examples of normal alkane include n-butane, n-propane, n-hexane, n-heptane, and n-octane. These hydrocarbons may be used alone or a combination of two or more thereof. A preferable form of the thermally expandable substance may be one obtained by dissolving hydrocarbon gaseous at room temperature, in hydrocarbon liquefied at room temperature. By using such a mixture of hydrocarbons, it is possible to obtain a sufficient expansion force from a low temperature region to a high temperature region in a vulcanization molding temperature range (150°C to 190°C) of an unvulcanized tire.

As for these thermally expandable microcapsules, for example, "EXPANCEL 091DU-80" "EXPANCEL 092DU-120" or the like (product name) manufactured by Expancel of Sweden, or "Matsumoto Microsphere F-85D" "Matsumoto Microsphere F-100D" or the like (product name) manufactured by Matsumoto Yushi-Seiyaku Co., Ltd. may be used.

The content of the thermally expandable microcapsules in the rubber composition is preferably 0.1 to 10 parts by mass per 100 parts by mass of the rubber component, more preferably 0.5 to 5 parts by mass.

(Porous Cellulose Particles)

When the rubber composition contains porous cellulose particles, in a case where the porous cellulose particles are exposed on the surface of the tire obtained by vulcanizing the rubber composition, water on the ice-snow road surface is absorbed by the porous cellulose particles and water between the tire and the road surface may be removed. In addition, due to the presence of cellulose as polysaccharide, interaction between the tire and water on the ice-snow road surface is caused. Thus, interaction between the tire and water may be further increased due to modified polyoxyalkylene glycol.

The porous cellulose particles are cellulose particles having a porous structure with a porosity of 75 to 95%, and may significantly improve the on-ice performance when blended with the rubber composition. When the porosity of the porous cellulose particles is 75% or more, the on-ice performance improving effect is excellent, and also, when the porosity is 95% or less, the strength of the particles may be increased. This porosity is more preferably 80 to 90%.

The porosity of the porous cellulose particles may be obtained from the following equation by measuring the volume of a sample (that is, porous cellulose particles) having a constant mass by a measuring cylinder, and obtaining the bulk specific gravity.

$$\text{Porosity [\%]}=\{1-(\text{bulk specific gravity of sample [g/ml]})/(\text{true specific gravity of sample [g/ml]})\}\times 100$$

Here, the true specific gravity of the cellulose is 1.5.

The particle size of the porous cellulose particle is not particularly limited, but those having an average particle size of 1000 μm or less are preferably used from the viewpoint of wear resistance. The lower limit of the average particle size is not particularly limited but is preferably 5 μm or more. The average particle size is more preferably 100 to 800 μm, further preferably 200 to 800 μm.

As for the porous cellulose particles, spherical particles in which a ratio of a major diameter/a minor diameter is 1 to 2 are preferably used. When the particles having such a spherical structure are used, the dispersibility in the rubber composition is improved, which may contribute to improvement of the on-ice performance or maintenance of the wear resistance.

The ratio of the major diameter/the minor diameter is more preferably 1.0 to 1.5.

The average particle size of the porous cellulose particles and the ratio of the major diameter/the minor diameter may be obtained as follows. That is, an image is obtained by observing the porous cellulose particles with a microscope,

and then, by using this image, major diameters and minor diameters of the particles (when the major diameter and the minor diameter are the same, the length in a certain axial direction and the length in an axial direction orthogonal thereto) are measured for 100 particles, and the average value is calculated to obtain the average particle size. In addition, the ratio of the major diameter/the minor diameter may be obtained by an average value of values obtained by dividing the major diameters by the minor diameters.

As for such porous cellulose particles, those which are "Viscopearl" commercially available from Rengo Co., Ltd., and also, are described in JP 2001-323095A or JP 2004-115284A may be preferably used.

The content of the porous cellulose particles in the rubber composition is preferably 0.3 to 20 parts by mass per 100 parts by mass of the rubber component. When the content is 0.3 parts by mass or more, the on-ice performance improving effect may be increased, and also, when it is 20 parts by mass or less, an excessive increase of the rubber hardness may be suppressed so that degradation of wear resistance may be suppressed. The content of the porous cellulose particles is more preferably 1 to 15 parts by weight, further preferably 3 to 15 parts by mass.

[Hydrophilic Short Fibers]

The rubber composition may contain hydrophilic short fibers.

When the rubber composition contains the hydrophilic short fibers, after the rubber composition is vulcanized, bubbles with long shapes are present in the tire (especially, the tread). Then, the bubbles with long shapes are exposed on the tire surface due to wear of the tire, and cavities are formed and easily function as a drainage channel for carrying out efficient drainage. Here, the cavities may take any shape such as a hole shape, a recess shape, or a groove shape.

In addition, since the short fibers are hydrophilic, the short fiber-derived cavities that may be formed on the tire surface may easily absorb water.

Here, the hydrophilic short fibers refer to short fibers whose contact angle with water is 5 to 80°.

A test piece obtained by molding the hydrophilic short fibers into a smooth plate shape is prepared, and water is dropped on the surface of the test piece under conditions of 25°C, and relative humidity 55%. Immediately after that, when observation is performed just nearby, an automatic contact angle meter DM-301 of Kyowa Interface Chemistry Co., Ltd. 1 is used to measure an angle formed by a straight line formed by the test piece surface and a tangent line on the water droplet surface so that the contact angle of the hydrophilic short fibers with water may be obtained.

As for the hydrophilic short fibers, a resin having a hydrophilic group in a molecule (which may be referred to as a hydrophilic resin) may be used. Specifically, a resin containing at least one selected from an oxygen atom, a nitrogen atom, and a sulfur atom is preferred. Examples thereof include a resin containing at least one type of substituent selected from the group consisting of - OH, -COOH, -OCOR (R is an alkyl group), $-NH_2$, -NCO, and -SH. Among these substituents, -OH, -COOH, -OCOR, $-NH_2$, and -NCO are preferred.

The hydrophilic resin preferably has a small contact angle with water, and an affinity with water, but the hydrophilic resin is preferably insoluble in water.

Since the hydrophilic resin is insoluble in water, when water adheres to the vulcanized rubber surface and the tire surface, it is possible to prevent dissolution of the hydrophilic resin in water and to maintain the water absorption capability of short fiber-derived cavities.

More specific examples of the hydrophilic resin that has a small contact angle with water but is insoluble in water include an ethylene-vinyl alcohol copolymer, a vinyl alcohol homopolymer, a poly(meth)acrylic acid resin or an ester resin thereof, a polyamide resin, a polyethylene glycol resin, a carboxyvinyl copolymer, a styrene maleic acid copolymer, a polyvinyl pyrrolidone resin, a vinyl pyrrolidone-vinyl acetate copolymer, and mercapto ethanol.

Among them, at least one type selected from the group consisting of an ethylene-vinyl alcohol copolymer, a vinyl alcohol homopolymer, a poly(meth)acrylic acid resin, a polyamide resin, an aliphatic polyamide-based resin, an aromatic polyamide-based resin, a polyester resin, a polyolefin resin, a polyvinyl alcohol-based resin, and an acryl-based resin is preferred, and an ethylene-vinyl alcohol copolymer is more preferred.

The shape of the short fibers is not particularly limited and may be properly selected according to purposes. However, from the viewpoint of efficiently forming long-shape bubbles capable of functioning as a micro drainage ditch in the vulcanized rubber obtained by vulcanizing the short fiber-containing rubber composition, as an average value of 100 short fibers, the length in the major axis direction is preferably 0.1 to 10 mm, more preferably 0.5 to 5 mm. In addition, from the same viewpoint, as an average value of 100 short fibers, the average diameter (D) of short fibers is preferably 10 to 200 μm, more preferably 20 to 100 μm.

The content of the short fibers in the rubber composition is preferably 0.1 to 10 parts by mass per 100 parts by mass of the rubber component, more preferably 0.5 to 5 parts by mass.

The surface of the hydrophilic short fibers may be coated with a surfactant, mineral oil, castor oil, or the like.

The surfactant is not particularly limited, and examples thereof include a fatty acid multivalent alcohol ester, a non-ionic ester type surfactant, an alkanol amide type surfactant, and a sulfonic acid type surfactant.

[Vulcanizing Agent]

It is desirable that the rubber composition of the present invention contains a vulcanizing agent.

The vulcanizing agent is not particularly limited, and sulfur is usually used. Examples thereof include powdered sulfur, precipitated sulfur, colloidal sulfur, surface-treated sulfur, and insoluble sulfur.

In the rubber composition of the present invention, the content of the corresponding vulcanizing agent is preferably 0.1 to 10 parts by mass per 100 parts by mass of the rubber component. When the content is 0.1 parts by mass or more, the vulcanization may be sufficiently advanced, and when it is 10 parts by mass or less, the aging of the vulcanized rubber may be suppressed.

The content of the vulcanizing agent in the rubber composition is more preferably 0.5 to 8 parts by mass per 100 parts by mass of the rubber component, further preferably 1 to 6 parts by mass.

[Other Components]

The rubber composition of the present invention may contain other components as well as the rubber component, the filler, the low molecular weight conjugated diene-based polymer, the resin, the void introducing agent, and the vulcanizing agent as described above.

The other components are not particularly limited, and compounding agents that are usually used in the field of a rubber industry, for example, a softener other than the low molecular weight conjugated diene-based polymer, stearic acid, an anti-aging agent, zinc oxide, a foaming auxiliary, and a vulcanization accelerator, may be appropriately selected and contained within a range where the object of the present invention is not impaired.

<Preparation of Rubber Composition>

The rubber composition of the present invention may be produced by blending the components with each other, and performing kneading by using a kneading machine such as a Bunbury mixer, a roll, or an internal mixer.

Here, blending amounts of the rubber component, and the filler, are the same as amounts described above as contents in the rubber component.

The kneading of the components may be carried out by one step, or may be carried out by two or more separate steps. Examples of a method of kneading the components by two steps, include a method in which in the first step, a rubber component, a filler, a low molecular weight conjugated diene-based polymer, a resin, a silane coupling agent, and any other components other than a vulcanizing agent and a foaming agent are kneaded, and in the second step, the vulcanizing agent, hydrophilic short fibers and the foaming agent are kneaded.

The maximum temperature in the first step of kneading is preferably 130 to 170°C, and the maximum temperature in the second step is preferably 90 to 120°C.

<Vulcanized Rubber, Tire>

The vulcanized rubber and the tire of the present invention are obtained by using the rubber composition of the present invention.

The vulcanized rubber of the present invention is obtained by vulcanizing the rubber composition of the present invention.

The tire may be obtained through vulcanization after molding using the rubber composition of the present invention according to the type or member of the application target tire, or may be obtained by firstly obtaining a semi-vulcanized rubber from the rubber composition through a preliminary vulcanization step or the like, and further performing main vulcanization after molding using this.

It is desirable that from the viewpoint of the excellent balance between on-ice performance and wear resistance, the vulcanized rubber of the present invention is applied to a tread member, especially, a tread member for a studless tire among various tire members. As described above, it is desirable that the tire of the present invention has the vulcanized rubber of the present invention for the tread.

As a gas to be filled in the tire, not only normal air (or with an adjusted oxygen partial pressure), but also an inert gas such as nitrogen, argon, or helium may be used.

It is desirable that the vulcanized rubber and the tire of the present invention have a plurality of voids.

As described above, when the rubber composition contains the void introducing agent and the void introducing agent is a foaming agent, foaming occurs in the vulcanization process of the rubber composition so that voids may be provided in the vulcanized rubber. Meanwhile, when the void introducing agent is hydrophilic short fibers, the hydrophilic short fibers fall out of the vulcanized rubber or the hydrophilic short fibers are melted so that a plurality of voids may be provided on the surface or inside of the vulcanized rubber.

The foaming rate of the vulcanized rubber and the tire is usually 1 to 50%, preferably 5 to 40%. When the foaming rate falls within the corresponding range, foamed holes on the tire surface do not become too large, and a sufficient ground contact area may be secured. Then, the formation of foamed holes effectively functioning as a drainage ditch may be secured, while the amount of bubbles may be suitably maintained so that there is no risk of impairing the durability. Here, the foaming rate of the tire is calculated by the equation (1).

[Examples]

Hereinafter, the present invention will be described in more detail with reference to Examples, but these Examples are made for the purpose of exemplifying the present invention, and never limit the present invention.

<Preparation of Rubber Composition>

[Examples 1, 4, 5, and 7 to 9, Comparative Examples 1 to 3, 5, and 6]

Components of a rubber composition were kneaded by using a Bunbury mixer according to the compounding formulation shown in Tables 1 to 4 to prepare the rubber composition as a sample. The kneading of the components was carried out separately by a first mixing step and a final mixing step as illustrated in Table 1. In the final step, sulfur as a vulcanizing agent, a vulcanization accelerator, and a void introducing agent (hydrophilic short fibers and a foaming agent) were blended.

[Examples 2, 3, and 6, Comparative Examples 4, 7, and 8]

Components of a rubber composition are kneaded by using a Bunbury mixer according to the compounding formulation shown in Tables 1 to 4 to prepare the rubber composition as a sample. The kneading of the components is carried out separately by a first mixing step and a final mixing step as illustrated in Table 1. In the final step, sulfur as a vulcanizing agent, a vulcanization accelerator, and a void introducing agent (hydrophilic short fibers and a foaming agent) are blended.

Table 1

| | | | |
|---|---|---|---|
| Blending | First mixing step | Rubber component (rubber component of type shown in Tables 3 and 4) | Amount shown in Tables 3 and 4 |
| | | Filler (carbon black) | 35 |
| | | Filler (silica) | 35 |
| | | Silane coupling agent | 4 |
| | | Polymer (polymers 1 to 4 shown in Tables 2 to 4) | Amount shown in Tables 3 and 4 |
| | | Resin | 20 |
| | | stearic acid | 2 |
| | | zinc oxide | 2 |
| | | anti-aging agent | 2 |
| | Final mixing step | Vulcanizing agent (sulfur) | 2 |
| | | Vulcanization accelerator 1 | 1 |
| | | Vulcanization accelerator 2 | 1 |
| | | Hydrophilic short fibers 1 | Amount shown in Tables 3 and 4 |
| | | Hydrophilic short fibers 2 | Amount shown in Tables 3 and 4 |
| | | Foaming agent | 4 |
| | | | (parts by mass) |

Details of components in Tables 1 to 4 are as follows.

(1) Rubber Component

Natural rubber: TSR20
Modified BR1: modified polybutadiene rubber produced by the following method
Modified BR2: modified polybutadiene rubber produced by the following method
Modified SBR: modified styrene-butadiene copolymer rubber produced by the following method

(2) Filler

Carbon black: product name "carbon N134", manufactured by Asahi Carbon Co., Ltd., $N_2SA=146\ m^2/g$
Silica: hydrous silicate produced by the following method

(3) Silane coupling agent: product name "Si69" manufactured by Evonic
(4) Polymer

Polymer 1: product name "Ricon 142" manufactured by Cray Valley
Polymer 2: product name "LBR-352" manufactured by Kuraray
Polymer 3: product name "Ricon 134" manufactured by Cray Valley
Polymer 4: product name "Ricon 154" manufactured by Cray Valley
Further, all the polymers 1 to 4 are unmodified.

For the polymers 1 to 4, the styrene bond content of the conjugated diene compound portion (described as "styrene bond content" in the table), and the vinyl bond content of the conjugated diene compound portion (described as "vinyl bond content" in the table) were obtained by an infrared method (Morero method) and are shown in Table 2. In addition, for the polymers 1 to 4, the weight average molecular weight measured by gel permeation chromatography in terms of polystyrene (described as "weight average molecular weight" in the table) is shown in Table 2. In the weight average molecular weight, for example, the weight average molecular weight of the polymer 1, which is expressed as "10," means $10\times10^3$, that is, 10,000.

Table 2

| | | Polymer 1 | Polymer 2 | Polymer 3 | Polymer 4 |
|---|---|---|---|---|---|
| Styrene bond content | % by mass | 0 | 0 | 0 | 0 |
| Vinyl bond content | % by mass | 47 | 55 | 24 | 74 |
| Weight average molecular weight ($\times10^3$) | - | 10 | 11 | 15 | 15 |

(5) Resin: product name "Escorez 1102" manufactured by Tonen Chemical Corporation
(6) Stearic acid: product name "stearic acid 50S" manufactured by New Japan Chemical Co., Ltd.
(7) Zinc oxide: product name "no. 3 zinc oxide" manufactured by Hakusui Tech Co., Ltd.
(8) Anti-aging agent: N-isopropyl-N'-phenyl-p-phenylene diamine
(9) Vulcanizing agent: product name "powdered sulfur" manufactured by Tsurumi Chemical Co., Ltd.
(10) Vulcanization accelerator

Vulcanization accelerator 1: product name "noxeller DM", di-2-benzothiazolyl disulfide, manufactured by Ouchi Shinko Chemical Industrial Co., Ltd.
Vulcanization accelerator 2: product name "noxeller CZ", N-cyclohexyl-2-benzothiazolyl sulfenamide, manufactured by Ouchi Shinko Chemical Industrial Co., Ltd.

(11) Void introducing agent: foaming agent, dinitrosopentamethylenetetramine (DPT)
(12) Hydrophilic short fibers

Hydrophilic short fibers 1: hydrophilic short fibers produced by the following method
Hydrophilic short fibers 2: hydrophilic short fibers obtained by applying mineral oil to hydrophilic short fibers 1

[Method of Producing Modified BR1]

(1) Preparation of catalyst

Into a dried, nitrogen-substituted glass bottle with a rubber stopper (volume 100 ml), in the following order, 7.11 g of a cyclohexane solution of butadiene (15.2% by mass), 0.59 ml of a cyclohexane solution of neodymium neodecanoate (0.56 mol/L), 10.32 ml of a toluene solution (3.23 mol/L as aluminum concentration) of methyl aluminoxane MAO (product name "PMAO" manufactured by Tosoh Akzo Co., Ltd.), and 7.77 ml of a hexane solution (0.90 mol/L) of diisobutyl aluminum hydride (manufactured by Kanto Chemical Co., Inc) were put, and aged for 2 min at room temperature, and then, 1.45 ml of a hexane solution (0.95 mol/L) of chlorinated diethyl aluminum (manufactured by Kanto Chemical Co., Inc) was added. At room temperature, aging was performed for 15 min with occasional stirring. In the catalyst solution obtained in this manner, the concentration of neodymium was 0.011 mol/L.

(2) Production of intermediate polymer

A glass bottle with a rubber stopper (volume: about 900 ml) was dried, and replaced with nitrogen, a cyclohexane solution of dried/purified butadiene and dry cyclohexane were put, individually, and a state was made in which 400 g of a cyclohexane solution of butadiene (12.5% by mass) was put. Next, 2.28 ml of the catalyst solution (0.025 mmol in terms of neodymium) prepared above in (1) was put, and polymerization was carried out in a warm water bath of 50°C for 1.0 h, so as to produce an intermediate polymer. In the microstructure of the obtained polymer, a cis 1,4 bond content was 95.5%.

(3) Modification treatment

A hexane solution having a 3-glycidoxypropyl trimethoxysilane concentration of 1.0 mol/L was put in the polymer solution obtained above in (2) so that 3-glycidoxypropyl trimethoxysilane had an equivalent of 23.5 mol for neodymium, and was treated at 50°C for 60 min. Then, 1.2 ml of sorbitan trioleic acid ester (manufactured by Kanto Chemical Co., Inc) was added, and a modification reaction was further carried out at 60°C for 1 h. Next, 2 ml of a 5% by mass solution of an anti-aging agent 2,2'-methylenebis(4-ethyl-6-t-butylphenol) (NS-5) in isopropanol was added to a polymerization system to stop the reaction. Further, reprecipitation was performed in isopropanol containing a trace amount of NS-5, and drum-drying was performed to obtain modified polybutadiene (modified BR1). No macrogel was recognized in the modified BR1, and Mooney viscosity at 100°C ($ML_{1+4}$: 100°C) was 59. The microstructure after the modification treatment was also the same as the microstructure of the intermediate polymer.

[Method of Producing Modified BR2]

(1) Production of unmodified polybutadiene

Under nitrogen, into a nitrogen-substituted 5L autoclave, 1.4 kg of cyclohexane, 250 g of 1,3-butadiene, and 2,2-ditetrahydrofuryl propane (0.285 mmol) were injected as a cyclohexane solution, and 2.85 mmol of n-butyl lithium (BuLi) was added thereto. Then, polymerization was performed in a 50°C warm water bath equipped with a stirring device for 4.5h. The reaction conversion rate of 1,3-butadiene was almost 100%. Some of the polymer solution was drawn into a methanol solution containing 1.3 g of 2,6-di-tert-butyl-p-cresol to stop the polymerization. Then, the solvent was removed through steam stripping, and roll-drying of 110°C was performed to obtain unmodified polybutadiene. The microstructure (vinyl bond content) of the obtained unmodified polybutadiene was measured, and as a result, the vinyl bond content was 30% by mass.

(2) Production of primary amine modified polybutadiene (modified BR2)

The polymer solution obtained above in (1) was kept at a temperature of 50°C without deactivation of a polymerization catalyst, 1129 mg (3.364 mmol) of N,N-bis(trimethylsilyl)aminopropylmethyldiethoxysilane having a protected primary amino group was added, and a modification reaction was carried out for 15 min.

Then, 8.11 g of tetrakis(2-ethyl-1,3-hexanediolato)titanium as a condensation accelerator was added and stirring was further performed for 15 min.

Finally, 242 mg of silicon tetrachloride as a metal halogen compound was added to the polymer solution after the reaction, and 2,6-di-tert-butyl-p-cresol was added. Next, steam stripping was performed to remove the solvent and deprotection was carried out on the protected primary amino group. The rubber was dried with a heat roll whose temperature was adjusted to 110°C to obtain primary amine modified polybutadiene (modified BR2). The microstructure (vinyl bond content) of the obtained modified polybutadiene was measured, and as a result, the vinyl bond content was 30% by mass.

The microstructures (vinyl bond contents) of the intermediate polymer, the unmodified polybutadiene, and the

modified polybutadiene were measured by an infrared method (Morero method).

[Method of Producing Modified SBR]

To a dried, nitrogen-substituted pressure-resistant glass container with 800 mL, a cyclohexane solution of 1,3-butadiene and a cyclohexane solution of styrene were added such that 1,3-butadiene was 67.5 g and styrene was 7.5 g, and then, 0.6 mmol of 2,2-ditetrahydrofuryl propane was added and 0.8 mmol of n-butyl lithium was added. Then, polymerization was carried out at 50°C for 1.5 h.

To a polymerization reaction system in which the polymerization conversion rate at this time became almost 100%, 0.72 mmol of N,N-bis(trimethylsilyl)aminopropylmethyl diethoxysilane as a modifier was added, and a modification reaction was carried out at 50°C for 30 min. Then, 2 mL of a 5% by mass solution of 2,6-di-t-butyl-p-cresol (BHT) in isopropanol was added to stop the reaction and drying was performed according to a conventional method to obtain modified SBR. The micro structure (vinyl bond content) of the obtained modified SBR was measured by a Morero method, and as a result, the styrene bond content was 10% by mass, and the vinyl bond content of a butadiene portion was 40%.

The styrene bond content of the modified SBR was obtained from an integral ratio of $^1$H-NMR spectrum, and the result was 10% by mass. Therefore, when the content of the modified SBR in the rubber component is 20% by mass, the ratio (st/s) of the styrene bond content st (%) of the rubber component to the mass s of the styrene-butadiene copolymer rubber is calculated as 10/20=0.5.

[Method of Producing Hydrous Silicate]

89 L of water and 1.70 L of a sodium silicate aqueous solution ($SiO_2$ 160 g/L, $SiO_2/Na_2O$ molar ratio: 3.3) were put into a 180 L stirrer-equipped reaction tank (stainless steel) with a jacket and heated to 75°C. The $Na_2O$ concentration in the produced solution was 0.015 mol/L.

While the temperature of this solution was maintained at 75°C, the same sodium silicate aqueous solution as above at a flow rate of 520 ml/min, and sulfuric acid (18 mol/L) at a flow rate of 23 ml/min were simultaneously dropped. A neutralization reaction was carried out while the flow rate was adjusted, and the $Na_2O$ concentration in the reaction solution was maintained in a range of 0.005 to 0.035 mol/L. The reaction solution began to become white-turbid in the middle of the reaction, and became a gel-like solution with an increase of viscosity after 46 min. Further, the addition was continued, and the reaction was stopped after 100 min. The silica concentration in the produced solution was 60 g/L. Subsequently, the same sulfuric acid as above was added until pH of the solution became 3 to obtain a silicic acid slurry. The obtained silicic acid slurry was filtered with a filter press and was washed with water to obtain a wet cake. Next, the wet cake was formed into a slurry by using an emulsifying device and was dried with a spray dryer to obtain wet-method hydrous silicate.

[Method of Producing Hydrophilic Short Fibers 1]

Hydrophilic short fibers 1 were produced according to Production Example 3 disclosed in JP 2012-219245A. Specifically, 40 parts by mass of polyethylene [NOVATEC HJ360 manufactured by Japan polyethylene Corporation (MFR 5.5, melting point: 132°C)] and 40 parts by mass of an ethylene-vinyl alcohol copolymer [EVAL F104B manufactured by Kuraray (MFR 4.4, melting point: 183°C)] were put into a hopper by using two biaxial extruders, and were extruded individually from a die outlet at the same time. Then, fibers obtained according to a conventional method were cut into a length of 2 mm to prepare the hydrophilic short fibers 1 on which a coating layer made of polyethylene was formed.

<Evaluation of Vulcanized Rubber Properties>

[Examples 1, 4, 5, and 7 to 9, Comparative Examples 1 to 3, 5, and 6]

The properties of a vulcanized rubber, that is, a storage modulus (G') and a loss tangent (tan $\delta$) were measured by the following method. In addition, the foaming rate of the vulcanized rubber was obtained by the equation (1). The evaluation results are shown in Tables 3 and 4.

A vulcanized rubber obtained by vulcanizing a rubber composition at 145°C for 33 min was used and the storage modulus (G') at -20°C and the loss factor (tan $\delta$) at -20°C were measured by using a viscoelasticity measuring device "ARES" (manufactured by TA Instruments) under conditions of a temperature of -20°C, a strain of 1%, and a frequency of 15 Hz.

The smaller the storage modulus, the smaller the modulus of elasticity, and the better the performance. In addition, the larger the loss factor, the higher the hysteresis loss, and thus it can be said that the performance is good.

[Examples 2, 3, and 6, Comparative Examples 4, 7, and 8]

The properties of a vulcanized rubber, that is, a storage modulus (G') and a loss tangent (tan δ) are measured by the following method. In addition, the foaming rate of the vulcanized rubber is obtained by the equation (1). The evaluation results are shown in Tables 3 and 4.
A vulcanized rubber obtained by vulcanizing a rubber composition at 145°C for 33 min is used and the storage modulus (G') at -20°C and the loss factor (tan δ) at -20°C are measured by using a viscoelasticity measuring device "ARES" (manufactured by TA Instruments) under conditions of a temperature of -20°C, a strain of 1%, and a frequency of 15 Hz.
The smaller the storage modulus, the smaller the modulus of elasticity, and the better the performance. In addition, the larger the loss factor, the higher the hysteresis loss, and thus it can be said that the performance is good.

<Evaluation of Tire>

[Examples 1, 4, and 9, Comparative Example 1]

1. Evaluation of On-ice performance

A test tire (tire size 195/65 R15) was prepared according to a conventional method by using the obtained rubber composition for a tread.
Four test tires in each of Examples and each of Comparative Examples were mounted on a Japanese passenger car (anti-lock braking system: equipped with ABS) with a displacement class of 1600cc, and a braking distance of a brake was measured at an ice temperature of -1°C. The braking distance of the test tire in Comparative Example 1 was set as 100, and an index was expressed by the following equation.

On-ice performance index = (Braking distance of test tire in Comparative Example 1 / Braking distance of test tire other than Comparative Example 1) × 100

The larger the on-ice performance index, the better the on-ice performance.

2. Evaluation of Wear Resistance

After an actual vehicle using the test tire in each of Examples and each of Comparative Examples traveled 5000 km on a paved road surface, the remaining groove (depth) was measured. Mileages required for a tread to be worn by 1 mm were relatively compared. The test tire of Comparative Example 1 was set as 100 and an index was expressed. The larger the index value, the better the wear resistance.

3. Evaluation of balance between on-ice performance and wear resistance

The balance index between on-ice performance and wear resistance was calculated through the following equation by using the on-ice performance index and the wear resistance index.

$$\text{Balance index} = (\text{On-ice performance index} + \text{Wear resistance index})/2$$

When the balance index is 102 or more, the tire is excellent in the balance between on-ice performance and wear resistance.

4. Voids of Vulcanized Rubber

The appearance of the vulcanized rubber cut out from a prototype tire prepared in the on-ice performance evaluation, and the cross section of the prototype tire were observed. The vulcanized rubbers and the prototype tires in Examples and Comparative Examples had a plurality of voids.

[Examples 2, 3, and 5 to 8, Comparative Examples 2 to 8]

1. Evaluation of On-ice performance

A test tire (tire size 195/65 R15) is prepared according to a conventional method by using the obtained rubber

composition for a tread.

Four test tires in each of Examples and each of Comparative Examples are mounted on a Japanese passenger car (anti-lock braking system: equipped with ABS) with a displacement class of 1600cc, and a braking distance of a brake is measured at an ice temperature of -1°C. The braking distance of the test tire in Comparative Example 1 is set as 100, and an index is expressed by the following equation.

On-ice performance index = (Braking distance of test tire in Comparative Example 1 / Braking distance of test tire other than Comparative Example 1) × 100

The larger the on-ice performance index, the better the on-ice performance.

2. Evaluation of Wear resistance

After an actual vehicle using the test tire in each of Examples and each of Comparative Examples travels 5000 km on a paved road surface, the remaining groove is measured. Mileages required for a tread to be worn by 1 mm are relatively compared. The test tire of Comparative Example 1 is set as 100 and an index is expressed. The larger the index value, the better the wear resistance.

3. Evaluation of Balance between on-ice performance and wear resistance

The balance index between on-ice performance and wear resistance is calculated through the following equation by using the on-ice performance index and the wear resistance index.

$$\text{Balance index} = (\text{On-ice performance index} + \text{Wear resistance index})/2$$

When the balance index is 102 or more, the tire is excellent in the balance between on-ice performance and wear resistance.

4. Voids of vulcanized rubber

The appearance of the vulcanized rubber cut out from a prototype tire prepared in the on-ice performance evaluation and the cross section of the prototype tire are observed. The vulcanized rubbers and the prototype tires in Examples and Comparative Examples have a plurality of voids.

Table 3

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Blending | Natural rubber | parts | 40 | 35 | 44 | 40 | 40 | 44 | 40 | 40 | 40 |
| | Modified BR1 | parts | 40 | 45 | 36 | 40 | - | - | - | 40 | 40 |
| | Modified BR2 | parts | - | - | - | - | 40 | 36 | 40 | - | - |
| | Modified SBR | parts | 20 | 20 | 20 | 20 | 20 | 20 | 20 | 20 | 20 |
| | Polymer 1 | parts | 20 | 20 | 20 | - | 20 | 20 | - | - | 20 |
| | Polymer 2 | parts | - | - | - | 20 | - | - | 20 | 10 | - |
| | Hydrophilic short fibers 1 | parts | 2 | 2 | 2 | 2 | 2 | 2 | 2 | 2 | - |
| | Hydrophilic short fibers 2 | parts | - | - | - | - | - | - | - | - | 2 |

(continued)

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Property | Foaming rate | % | 20 | 20 | 20 | 20 | 20 | 20 | 20 | 20 | 20 |
| | Storage modulus (G') at -20°C | index | 94 | 81 | 106 | 95 | 94 | 106 | 95 | 98 | 94 |
| | Loss factor (tan δ) at -20°C | index | 103 | 98 | 106 | 104 | 103 | 106 | 104 | 102 | 103 |
| Evaluation | On-ice performance | index | 105 | 105 | 105 | 105 | 104 | 104 | 105 | 103 | 107 |
| | Wear resistance | index | 99 | 101 | 101 | 102 | 102 | 103 | 102 | 102 | 99 |
| | Balance between on-ice performance and wear resistance | index | 102 | 103 | 103 | 104 | 103 | 103 | 104 | 103 | 103 |

Table 4

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Blending | Natural rubber | parts | 45 | 45 | 40 | 50 | 40 | 40 | 30 | 40 |
| | Modified BR1 | parts | 55 | 55 | 60 | 25 | 40 | 40 | 50 | 20 |
| | Modified BR2 | parts | - | - | - | - | - | - | - | - |
| | Modified SBR | parts | - | - | - | 25 | 20 | 20 | 20 | 40 |
| | Polymer 1 | parts | 20 | 20 | 20 | 20 | - | - | 20 | 20 |
| | Polymer 3 | parts | - | - | - | - | 20 | - | - | - |
| | Polymer 4 | parts | - | - | - | - | - | 20 | - | - |
| | Hydrophilic short fibers 1 | parts | 2 | 2 | 2 | 2 | 2 | 2 | 2 | 2 |
| Property | Foaming rate | % | 20 | 30 | 20 | 20 | 20 | 20 | 20 | 20 |
| | Storage modulus (G') at -20°C | index | 100 | 90 | 86 | 129 | 93 | 92 | 83 | 89 |
| | Loss factor (tan δ) at 20°C | index | 100 | 100 | 96 | 113 | 102 | 101 | 92 | 116 |
| Evaluation | On-ice performance | index | 100 | 106 | 101 | 103 | 104 | 102 | 95 | 103 |
| | Wear resistance | index | 100 | 85 | 100 | 98 | 98 | 101 | 102 | 96 |
| | Balance between on-ice performance and wear resistance | index | 100 | 96 | 100 | 100 | 101 | 101 | 99 | 99 |

As can be found from Tables 3 and 4, in all the prototype tires of Examples, the balance indices between on-ice performance and wear resistance are 102 or more, and the balance between on-ice performance and wear resistance is excellent.

Meanwhile, in the prototype tires of Comparative Examples, the balance indices between on-ice performance and wear resistance are less than 102, and the balance between on-ice performance and wear resistance is not excellent.

Industrial Applicability

According to the present invention, it is possible to provide a tire excellent in the balance between on-ice performance and wear resistance. This tire is very suitable for a studless tire because it is excellent in wear resistance, exhibits a gripping force even during running on an ice-snow road surface, and is excellent in a vehicle braking property.

## Claims

**1.** A rubber composition comprising:

a rubber component containing natural rubber, polybutadiene rubber, and styrene-butadiene copolymer rubber;
a silica-containing filler; and
an unmodified conjugated diene-based polymer in which a weight average molecular weight measured by gel permeation chromatography in terms of polystyrene is 5,000 or more and less than 40,000, a styrene bond content of a conjugated diene compound portion is less than 10% by mass, and a vinyl bond content of the conjugated diene compound portion is 40% to 65% by mass,
wherein a mass n of the natural rubber in the rubber component is 35% by mass to 44% by mass, a mass b of the polybutadiene rubber, and a mass s of the styrene-butadiene copolymer rubber satisfy a relationship of $s \leq b$, and a content of the conjugated diene-based polymer is 1 to 40 parts by mass per 100 parts by mass of the rubber component.

**2.** The rubber composition according to claim 1, wherein the conjugated diene-based polymer is polybutadiene.

**3.** The rubber composition according to claim 1 or 2, wherein the weight average molecular weight of the conjugated diene-based polymer in terms of polystyrene is 6,000 or more and 30,000 or less.

**4.** The rubber composition according to any one of claims 1 to 3, wherein the vinyl bond content of the conjugated diene compound portion of the conjugated diene-based polymer is 50% by mass or more.

**5.** The rubber composition according to any one of claims 1 to 4, wherein a ratio (st/s) of a styrene bond content st (%) of the rubber component to the mass s is 1.0 or less.

**6.** The rubber composition according to any one of claims 1 to 5, containing a void introducing agent.

**7.** The rubber composition according to claim 6, wherein the void introducing agent is at least one type selected from the group consisting of a foaming agent, metal sulfate, thermally expandable microcapsules, and porous cellulose particles.

**8.** A vulcanized rubber using the rubber composition according to any one of claims 1 to 7.

**9.** The vulcanized rubber according to claim 8, having a plurality of voids.

**10.** A tire having the vulcanized rubber according to claim 8 or 9 for a tread.

## Patentansprüche

**1.** Kautschukzusammensetzung, die Folgendes umfasst:

eine Kautschukkomponente, die Naturkautschuk, Polybutadien-Kautschuk und Styrol-Butadien-Kopolymer-Kautschuk enthält,

einen siliziumdioxidhaltigen Füllstoff und
ein unmodifiziertes konjugiertes Polymer auf Dien-Grundlage, in dem ein gewichtsgemitteltes Molekulargewicht, gemessen durch Gelpermeationschromatographie, in Bezug auf Polystyrol 5 000 oder mehr und weniger als 40 000 beträgt, ein Styrolbindungsgehalt eines konjugierten Dien-Verbindungsanteils weniger als 10 Masse-% beträgt und ein Vinylbindungsgehalt des konjugierten Dien-Verbindungsanteils 40 bis 65 Masse-% beträgt,
wobei eine Masse n des Naturkautschuks in der Kautschukkomponente 35 Masse-% bis 44 Masse-% beträgt, eine Masse b des Polybutadien-Kautschuks und eine Masse s des Styrol-Butadien-Kopolymer-Kautschuks eine Beziehung von $s \leq b$ erfüllen und
ein Gehalt des konjugierten Polymers auf Dien-Grundlage 1 bis 40 Masseanteile auf 100 Masseanteile der Kautschukkomponente beträgt.

2. Kautschukzusammensetzung nach Anspruch 1, wobei das konjugierte Polymer auf Dien-Grundlage Polybutadien ist.

3. Kautschukzusammensetzung nach Anspruch 1 oder 2, wobei das gewichtsgemittelte Molekulargewicht des konjugierten Polymers auf Dien-Grundlage in Bezug auf Polystyrol 6 000 oder mehr und 30 000 oder weniger beträgt.

4. Kautschukzusammensetzung nach einem der Ansprüche 1 bis 3, wobei der Vinylbindungsgehalt des konjugierten Dien-Verbindungsanteils des konjugierten Polymers auf Dien-Grundlage 50 Masse-% oder mehr beträgt.

5. Kautschukzusammensetzung nach einem der Ansprüche 1 bis 4, wobei ein Verhältnis (st/s) eines Styrolbindungsgehalts st (%) der Kautschukkomponente zu der Masse s 1,0 oder weniger beträgt.

6. Kautschukzusammensetzung nach einem der Ansprüche 1 bis 5, die ein Poreneinführungsmittel enthält.

7. Kautschukzusammensetzung nach Anspruch 6, wobei das Poreneinführungsmittel mindestens ein Typ ist, der aus der Gruppe ausgewählt ist, die aus einem Schaummittel, Metallsulfat, thermisch expandierbaren Mikrokapseln und porösen Zelluloseteilchen besteht.

8. Vulkanisierter Kautschuk, der die Kautschukzusammensetzung nach einem der Ansprüche 1 bis 7 verwendet.

9. Vulkanisierter Kautschuk nach Anspruch 8, der eines Vielzahl von Poren aufweist.

10. Reifen, der den vulkanisierten Kautschuk nach Anspruch 8 oder 9 aufweist, für eine Lauffläche.

## Revendications

1. Composition de caoutchouc comprenant :

un composant de caoutchouc contenant du caoutchouc naturel, du caoutchouc de polybutadiène et du caoutchouc de copolymère styrène-butadiène ;
un agent de remplissage contenant de la silice ; et
un polymère à base de diène conjugué non modifié dans lequel un poids moléculaire moyen en poids mesuré par chromatographie par perméation de gel en termes de polystyrène est de 5 000 ou plus, et moins que 40 000, une teneur en liaisons styrène d'une partie de composé diène conjugué est inférieure à 10 % en masse et une teneur en liaisons vinyle de la partie de composé diène conjugué est de 40 % à 65 % en masse,
dans laquelle une masse n du caoutchouc naturel dans le composant de caoutchouc est de 35 % en masse à 44 % en masse, une masse b du caoutchouc de polybutadiène et une masse s du caoutchouc de copolymère styrène-butadiène satisfont une relation $s \leq b$, et
une teneur du polymère à base de diène conjugué est de 1 et 40 parties en masse pour 100 parties en masse du composant de caoutchouc.

2. Composition de caoutchouc selon la revendication 1, dans laquelle le polymère à base de diène conjugué est du polybutadiène.

3. Composition de caoutchouc selon la revendication 1 ou 2, dans laquelle le poids moléculaire moyen en poids du polymère à base de diène conjugué en termes de polystyrène est compris entre 6 000 ou plus et 30 000 ou moins.

4. Composition de caoutchouc selon l'une quelconque des revendications 1 à 3, dans laquelle la teneur en liaisons vinyle de la partie de composé diène conjugué du polymère à base de diène conjugué est supérieure ou égale à 50 % en masse.

5. Composition de caoutchouc selon l'une quelconque des revendications 1 à 4, dans laquelle un rapport (st/s) d'une teneur en liaisons styrène st (%) du composant de caoutchouc sur la masse s est égal ou inférieur à 1,0.

6. Composition de caoutchouc selon l'une quelconque des revendications 1 à 5, contenant un agent d'introduction de vides.

7. Composition de caoutchouc selon la revendication 6, dans laquelle l'agent d'introduction de vides est au moins un type sélectionné parmi le groupe constitué par un agent moussant, un sulfate de métal, des microcapsules dilatables thermiquement et des particules de cellulose poreuse.

8. Caoutchouc vulcanisé utilisant la composition de caoutchouc selon l'une quelconque des revendications 1 à 7.

9. Caoutchouc vulcanisé selon la revendication 8, comportant une pluralité de vides.

10. Pneu comportant le caoutchouc vulcanisé selon la revendication 8 ou 9 pour une bande de roulement.

[FIG. 1]

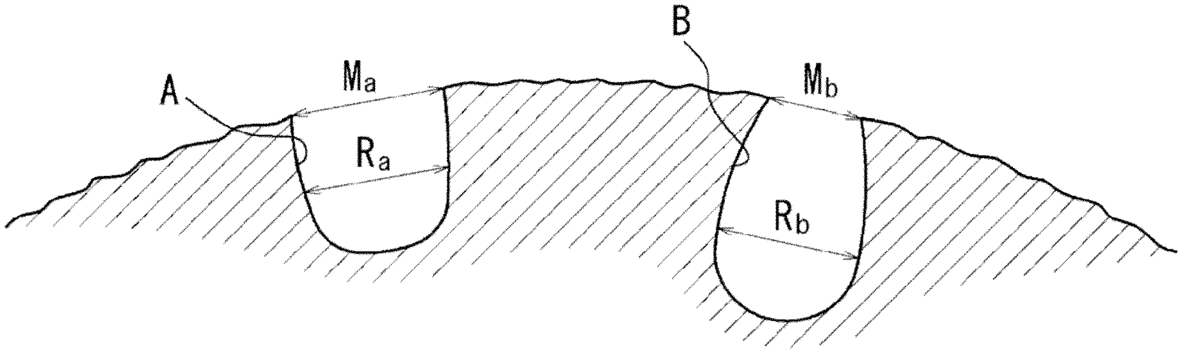
A
Ma
Ra
B
Mb
Rb

[FIG. 2]

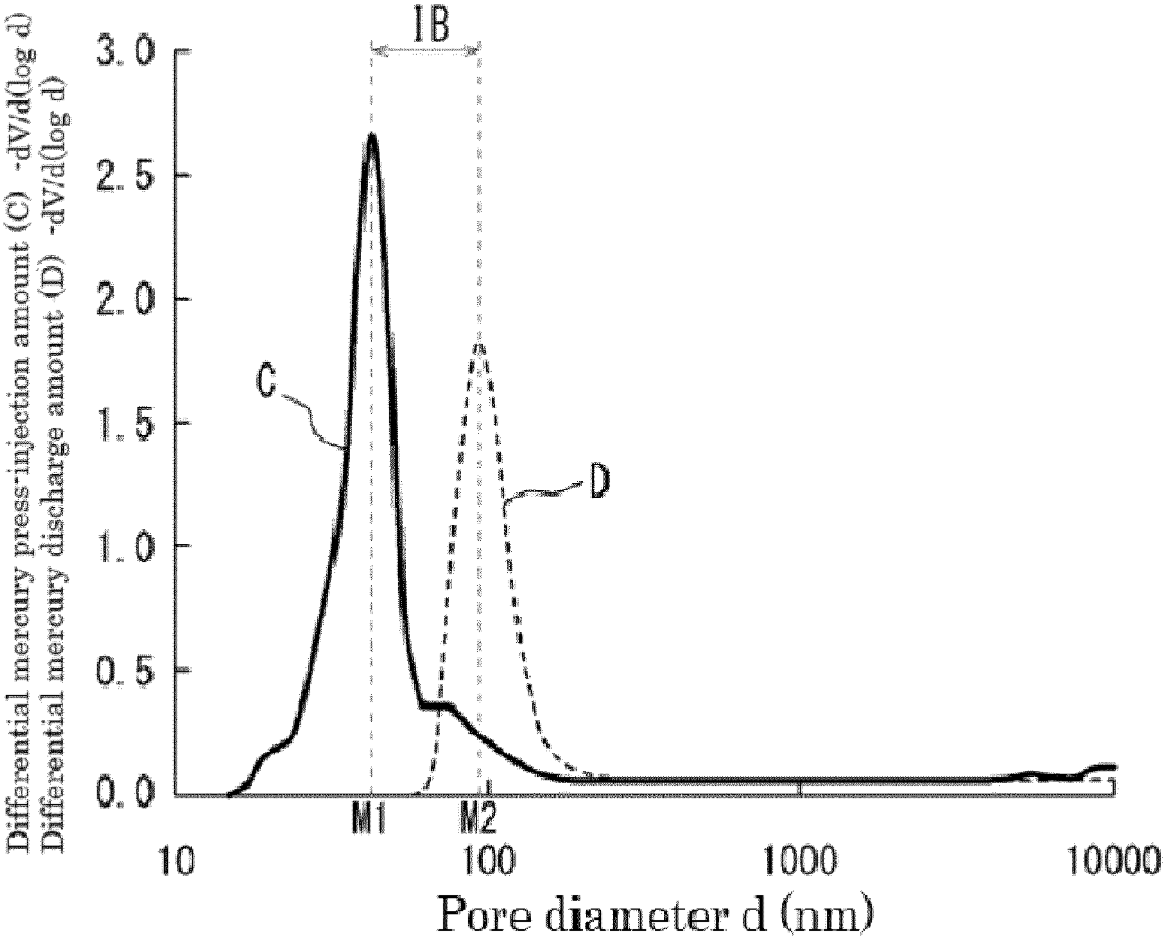
Differential mercury press-injection amount (C) -dV/d(log d)
Differential mercury discharge amount (D) -dV/d(log d)
3.0
2.5
2.0
1.5
1.0
0.5
0.0
IB
C
D
M1
M2
10
100
1000
10000
Pore diameter d (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2018297406 A
- JP 9194640 A
- WO 2017126629 A
- JP 2001323095 A
- JP 2004115284 A
- JP 2012219245 A